(19) Europäisches Patentamt
European Patent Office
Office européen des brevets

(11) EP 4 553 569 A1

(12) **EUROPEAN PATENT APPLICATION**
published in accordance with Art. 153(4) EPC

(43) Date of publication:
**14.05.2025 Bulletin 2025/20**

(21) Application number: **23850345.2**

(22) Date of filing: **27.07.2023**

(51) International Patent Classification (IPC):
***G02F 1/153*** (2006.01) ***G02F 1/155*** (2006.01)
***G02F 1/1523*** (2019.01) ***B32B 7/023*** (2019.01)
***C09K 9/00*** (2006.01) ***E06B 9/24*** (2006.01)
***B60J 3/04*** (2006.01) ***G02F 1/15*** (2019.01)

(52) Cooperative Patent Classification (CPC):
**B32B 7/023; B60J 3/04; C09K 9/00; E06B 9/24; G02F 1/15; G02F 1/1523; G02F 1/153; G02F 1/155**

(86) International application number:
**PCT/KR2023/010931**

(87) International publication number:
**WO 2024/029841 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.08.2022 KR 20220095421**
**17.08.2022 KR 20220102812**
**21.11.2022 KR 20220156070**

(71) Applicant: **SKC Co., Ltd.**
**Suwon-si, Gyeonggi-do 16338 (KR)**

(72) Inventors:
- **JANG, Hae Seong**
**Suwon-si Gyeonggi-do 16338 (KR)**
- **OH, Seung Bae**
**Suwon-si Gyeonggi-do 16338 (KR)**
- **LA, Yong Sang**
**Suwon-si Gyeonggi-do 16338 (KR)**
- **AHN, Byeong Uk**
**Suwon-si Gyeonggi-do 16338 (KR)**
- **PARK, Jae Hyoung**
**Suwon-si Gyeonggi-do 16338 (KR)**
- **LEE, Seong Hwan**
**Suwon-si Gyeonggi-do 16338 (KR)**

(74) Representative: **Isarpatent**
**Patent- und Rechtsanwälte**
**Barth Hassa Peckmann & Partner mbB**
**Friedrichstraße 31**
**80801 München (DE)**

(54) **ELECTROCHROMIC DEVICE, LAMINATE USED FOR SAME, METHOD FOR MANUFACTURING SAME, AND WINDOW APPARATUS COMPRISING SAME**

(57) An embodiment provides an electrochromic device comprising: a first substrate; a second substrate disposed on the first substrate; and an electrochromic part disposed between the first substrate and the second substrate, wherein the rate of light transmittance change, measured by a measurement method below, is less than 0.25.

【FIG. 1】

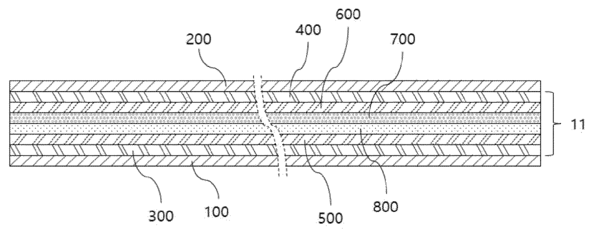


EP 4 553 569 A1

## Description

[Technical Field]

Embodiments relate to an electrochromic element, a laminate used in the electrochromic element, a method of fabricating the electrochromic element and a window device including the electrochromic element.

[Background Art]

Electrochromic films, whose colors change due to coloring and discoloring through oxidation-reduction reactions at each oxidation electrode and reduction electrode depending on an applied potential, can be artificially controlled by a user to emit visible light and infrared rays, and various types of inorganic oxides are used as electrode materials.

Electrochromic films as described above have been developed in various ways and patent-applied. As examples of related patent applications, there are Korea Patent Application Publication No. 10-2001-0087586, which discloses a film that changes from transparent to blue by depositing $MoO_3$, a reduced chromogenic oxide, on one of two ITO films (1A, 1B) formed by depositing a conductive Indium-tin oxide thin film on a glass film, and depositing $WO_3$, also a reduced chromogenic material, is deposited on the other ITO film, and then depositing a solid electrolyte of lithium, an alkali metal, on the deposited ITO film, and then injecting polyaniline, a conductive polymer, between the two films, and then allowing passing through a high-frequency compression roller to apply voltage, and Korea Utility Model Publication No. 0184841 which discloses a film, whose color changes by electric energy, characterized by depositing indium-tin oxide on a 0.05 mm thick glass film, and then depositing opposite surfaces of the transition metal oxide film with $WO_3$, a reduced chromogenic material, and $IrO_2$, an oxidized chromogenic material, with a polymer solid electrolyte, $\alpha$-PEO copolymer, therebetween, and then bonding the opposite surfaces with a high-frequency roller.

[Disclosure]

[Technical Problem]

Therefore, the present invention has been made in view of the above problems, and it is one object of the present invention to provide an electrochromic element having improved durability and a window device including the same.

It is another object of the present invention to provide a method of easily fabricating an electrochromic element having high thickness uniformity, improved mechanical strength, improved peel strength, excellent appearance, less electrolyte leakage, and improved durability against mechanical deformation; and a laminate having improved long-term reliability.

[Technical Solution]

In accordance with an aspect of the present invention, the above and other objects can be accomplished by the provision of an electrochromic element including a first substrate; a second substrate disposed on the first substrate; and an electrochromic part disposed between the first substrate and the second substrate, wherein a change in light transmittance measured by Measurement Method 1 below is less than 0.25:

[Measurement Method 1]

the electrochromic part is irradiated with similar sunlight at an intensity of 1000 $W/m^2$ for 10 minutes through the first substrate, a first light transmittance of the electrochromic element before irradiation with the similar sunlight is measured, a second light transmittance of the electrochromic element after irradiation with the similar sunlight is measured, and the change in light transmittance is obtained by dividing a difference between the first light transmittance and the second light transmittance by the first light transmittance.

In the electrochromic element according to an embodiment, a haze change measured by Measurement Method 2 below may be less than 5.5%:

[Measurement Method 2]

A first haze of the electrochromic element according to an embodiment is measured before irradiation with the similar sunlight, a second haze of the electrochromic element according to an embodiment is measured after irradiation with the similar sunlight, and the haze change is a value obtained by subtracting the first haze from the second haze.

In the electrochromic element according to an embodiment, a change in L* measured by Measurement Method 3

below may be less than 9:

[Measurement Method 3]

A first L* of the first discoloration layer before irradiation with the similar sunlight is measured, a second L* of the first discoloration layer after irradiation with the similar sunlight is measured, and the change in L* is an absolute value of a difference between the second L* and the first L*.

In the electrochromic element according to an embodiment, a change in a* measured by Measurement Method 4 below may be less than 5:

[Measurement Method 4]

A first a* of the first discoloration layer before irradiation with the similar sunlight is measured, a second a* of the first discoloration layer after irradiation with the similar sunlight is measured, and the change in a* is an absolute value of a difference between the second a* and the first a*.

In the electrochromic element according to an embodiment, a change in b* measured by Measurement Method 5 below may be less than 10:

[Measurement Method 5]

A first b* of the first discoloration layer before irradiation with the similar sunlight is measured, a second b* of the first discoloration layer after irradiation with the similar sunlight is measured, and the change in b* is an absolute value of a difference between the second b* and the first b*.

In an embodiment, the electrochromic part may include: a first transparent electrode disposed on the first substrate; a first discoloration layer disposed on the first transparent electrode; a photoelectron reduction layer disposed on the first discoloration layer; an electrolyte layer disposed on the photoelectron reduction layer; a second discoloration layer disposed on the electrolyte layer; and a second transparent electrode disposed on the second discoloration layer, wherein the first discoloration layer includes an electrochromic material, and the photoelectron reduction layer includes an electron-accepting material having a lower band gap than the electrochromic material.

In an embodiment, the first discoloration material may include tungsten oxide, and the electron-accepting material may include at least one selected from the group consisting of carbon black, carbon nanotubes and graphene.

In an embodiment, the first light transmittance may be 50% to 85%, and the first haze is 0.1% to 5%.

In an embodiment, the first L* may be 80 to 100, the first a* may be -2 to 1.5, and the first b* may be 0.5 to 4.

In an embodiment, the photoelectron reduction layer may include the electron-accepting material and a binder.

In accordance with another aspect of the present invention, provided is a window device, including: a frame; a window mounted on the frame; and an electrochromic element disposed in the window, wherein the electrochromic element includes: a first substrate; a second substrate disposed on the first substrate; and an electrochromic part disposed between the first substrate and the second substrate, wherein a change in light transmittance measured by Measurement Method below is less than 0.25:

[Measurement Method]

The electrochromic part is irradiated with similar sunlight at an intensity of 1000 W/$m^2$ for 10 minutes through the first substrate, a first light transmittance of the electrochromic element before irradiation with the similar sunlight is measured, a second light transmittance of the electrochromic element after irradiation with the similar sunlight is measured, and the change in light transmittance is obtained by dividing a difference between the first light transmittance and the second light transmittance by the first light transmittance.

The method of fabricating the electrochromic element according to an embodiment includes a step of preparing a first laminate; a step of disposing a second laminate on the first laminate; and a step of laminating the first laminate and the second laminate, wherein the first laminate includes a first substrate; a first transparent electrode disposed on the first substrate; and a first discoloration layer disposed on the first transparent electrode, the second laminate includes a second substrate; a second discoloration layer disposed on the second substrate; and an electrolyte composition layer is disposed on the second discoloration layer and includes a curable resin composition, a solvent and a metal salt, and in the first laminate, a decrease in transmittance after 90 days measured by Measurement Method 5 below is less than 5%:

[Measurement Method 5]

When the first laminate is left at room temperature and a relative humidity of 60% for 90 days, the transmittance

decrease is a difference between an initial transmittance of the first laminate and a transmittance after 90 days of the first laminate.

In an embodiment, the step of laminating the first laminate and the second laminate may include a step of curing the electrolyte composition layer.

In an embodiment, the first discoloration layer may include first electrochromic particles and an inorganic binder.

In an embodiment, the first electrochromic particles may include metal oxide including a dopant, the metal oxide may be at least one selected from the group consisting of tungsten oxide, niobium pentoxide, vanadium pentoxide, titanium oxide and molybdenum oxide, and the dopant may be at least one selected from the group consisting of aluminum, iron, calcium, magnesium, potassium, sodium, silicon element, copper, manganese, lead, bismuth, antimony, tin, chromium and cobalt.

A laminate for manufacturing the electrochromic element according to an embodiment may include a first substrate; a first transparent electrode disposed on the first substrate; and a first discoloration layer disposed on the first transparent electrode, wherein a decrease in transmittance after 90 days measured by Measurement Method 6 below is less than 5%:

[Measurement Method 6]

When the laminate is left at room temperature and a relative humidity of 60% for 90 days, the transmittance decrease is a difference between an initial transmittance of the laminate and a transmittance of the laminate after 90 days.

In an embodiment, a haze increase after 90 days measured by Measurement Method 7 below is less than 5%:

[Measurement Method 7]

When the laminate is left at room temperature and 60% relative humidity for 90 days, the haze increase is a difference between a haze of the laminate after 90 days and an initial haze of the laminate.

In an embodiment, a transmittance deviation after 90 days measured by Measurement Method 8 below may be less than 0.2:

[Measurement Method 8]

A transmittance in each of measurement regions of the laminate is measured after leaving the laminate at room temperature and 60% relative humidity for 90 days, and the transmittance deviation is a value obtained by dividing a difference between a maximum transmittance of the measurement regions and a minimum transmittance thereof by an average transmittance.

In an embodiment, the first discoloration layer may include first electrochromic particles and an inorganic binder.

In an embodiment, the first electrochromic particles may include metal oxide including a dopant, the metal oxide may be at least one selected from the group consisting of tungsten oxide, niobium pentoxide, vanadium pentoxide, titanium oxide and molybdenum oxide, and the dopant may be at least one selected from the group consisting of aluminum, iron, calcium, magnesium, potassium, sodium, silicon element, copper, manganese, lead, bismuth, antimony, tin, chromium and cobalt.

The electrochromic element according to an embodiment may include a first laminate; and a second laminate laminated on the first laminate, wherein the first laminate includes a first substrate; a first transparent electrode disposed on the first substrate; and a first discoloration layer disposed on the first transparent electrode, and the second laminate includes an electrolyte layer disposed on the first discoloration layer; a second discoloration layer disposed on the electrolyte layer; a second transparent electrode disposed on the second discoloration layer; and a second substrate disposed on the second transparent electrode, the electrolyte layer includes a curable resin composition, a solvent and a metal salt, the first laminate is laminated under the electrolyte layer, and in the first laminate, a decrease in transmittance after 90 days measured by Measurement Method 9 below is less than 5%:

[Measurement Method 9]

When the first laminate is left at room temperature and a relative humidity of 60% for 90 days, the transmittance decrease is a difference between an initial transmittance of the first laminate and a transmittance of the first laminate after 90 days.

In an embodiment, a driving range decrease measured by Measurement Method 10 below may be less than 20%:

[Measurement Method 10]

When the electrochromic element is driven for 10000 cycles, the driving range decrease is a difference between an initial driving range and the driving range after 10000 cycles, 1 cycle is composed of one driving for coloring and one driving for discoloring, and the driving range means a difference between a transmittance when discolored and a transmittance when colored.

A window device according to an embodiment includes a frame; a window mounted on the frame; and an electrochromic element disposed in the window, wherein the electrochromic element includes a first laminate; and a second laminate laminated on the first laminate, the first laminate includes a first substrate; a first transparent electrode disposed on the first substrate; and a first discoloration layer disposed on the first transparent electrode, the second laminate includes an electrolyte layer disposed on the first discoloration layer; a second discoloration layer disposed on the electrolyte layer; a second transparent electrode disposed on the second discoloration layer; and a second substrate disposed on the second transparent electrode, the electrolyte layer includes a curable resin composition, a solvent and a metal salt, the first laminate is laminated under the electrolyte layer, and, in the first laminate, a decrease in transmittance after 90 days measured by Measurement Method 11 below is less than 5%:

[Measurement Method 11]

When the first laminate is left at room temperature and a relative humidity of 60% for 90 days, the first laminate is a difference between an initial transmittance and a transmittance of the first laminate after 90 days.

The electrochromic element according to an embodiment includes a first laminate including a first substrate, a first transparent electrode disposed on the first substrate and a first discoloration layer disposed on the first transparent electrode; an electrolyte layer disposed on the first discoloration layer; and a second laminate including a second discoloration layer disposed on the electrolyte layer, a second transparent electrode disposed on the second discoloration layer and a second substrate disposed on the second transparent electrode, and in the first laminate, a change in light transmittance measured by Measurement Method 12 below is 0.3 or less:

[Measurement Method 12]

The first discoloration layer is irradiated with similar sunlight at an intensity of 1000 $W/m^2$ for 10 minutes, a first light transmittance of the first laminate before irradiation with the similar sunlight is measured, a second light transmittance of the first laminate after irradiation with the similar sunlight is measured, and a change in light transmittance is obtained by dividing a difference between the first light transmittance and the second light transmittance by the first light transmittance.

In an embodiment, in the first laminate, a haze change measured by Measurement Method 13 below may be 5.5% or less:

[Measurement Method 13]

A first haze of the first laminate before irradiation with the similar sunlight is measured, a second haze of the first laminate after irradiation with the similar sunlight is measured, and the haze change is an absolute value of a difference between the second haze and the first haze.

In an embodiment, in the first laminate, a change in L* measured by Measurement Method 14 below may be 9 or less:

[Measurement Method 14]

The first L* of the first discoloration layer before irradiation with the similar sunlight is measured, the second L* of the first discoloration layer after irradiation with the similar sunlight is measured, and the change in L* is an absolute value of a difference between the second L* and the first L*.

In an embodiment, in the first laminate, a change in a* measured by Measurement Method 15 below may be 5 or less:

[Measurement Method 15]

The first a* of the first discoloration layer before irradiation with the similar sunlight is measured, the second a* of the first discoloration layer after irradiation with the similar sunlight is measured, and the change is a* is an absolute value of a difference between the second a* and the first a*.

In an embodiment, in the first laminate, a change in b* measured by Measurement Method 16 below may be 10 or

less:

[Measurement Method 16]

The first b* of the first discoloration layer before irradiation with the similar sunlight is measured, the second b* of the first discoloration layer after irradiation with the similar sunlight is measured, and the change in b* is an absolute value of a difference between the second b* and the first b*.

In an embodiment, the first discoloration layer may include a first discoloration material and an electron-accepting material having a lower band gap than the first discoloration material.

In an embodiment, the first discoloration material may include tungsten oxide, and the electron-accepting material may include at least one selected from the group consisting of carbon black, carbon nanotubes and graphene.

In an embodiment, the first light transmittance may be 70% to 90%, and the first haze may be 0.1% to 5%.

In an embodiment, the first L* may be 80 to 100, the first a* may be -2 to 1.5, and the first b* may be 0.5 to 4.

In an embodiment, the first discoloration layer may include the electron-accepting material in a content of 0.1 wt% to 1 wt% based on the total weight of the first discoloration layer.

The method of fabricating the electrochromic element according to an embodiment may include a step of providing a first substrate; and a first transparent electrode disposed on the first substrate; a step of forming a first discoloration layer including a first discoloration material and an electron-accepting material having a lower band gap than the first discoloration material on the first transparent electrode; a step of forming an electrolyte layer on the first discoloration layer; and a step of disposing a second discoloration layer, a second transparent electrode and a second substrate on the electrolyte layer.

In the first laminate, a change in light transmittance measured by Measurement Method 17 below may be 0.3 or less:

[Measurement Method 17]

The first discoloration layer is irradiated with similar sunlight at an intensity of 1000 $W/m^2$ for 10 minutes, a first light transmittance of the first laminate before irradiation with the similar sunlight is measured, a second light transmittance of the first laminate after irradiation with the similar sunlight is measured, and a change in light transmittance is obtained by dividing a difference between the first light transmittance and the second light transmittance by the first light transmittance.

[Advantageous effects]

A change in the light transmittance of an electrochromic element according to an embodiment is less than 0.25. Accordingly, the electrochromic element according to an embodiment can reduce changes in transmittance caused by external environments such as external sunlight.

That is, since the electrochromic element according to an embodiment can reduce a transmittance deviation due to external sunlight, it can easily control a target transmittance at the on-off time.

In addition, since the electrochromic element according to an embodiment includes a first laminate and first discoloration layer having a small haze change, a small L* change, a small a* change and a small b* change, a change in the appearance due to external sunlight can be small. Accordingly, the electrochromic element according to an embodiment can have a consistent appearance even when the external environment changes.

In addition, since the electrochromic element according to an embodiment includes the electron-accepting material, it can have a buffering effect against external light and/or driving voltage. Accordingly, the electrochromic element according to an embodiment can have improved durability.

In particular, the electrochromic element according to an embodiment can be driven by a constant driving voltage because it reduces a transmittance change and appearance deviation due to external light. Accordingly, the electrochromic element according to an embodiment can reduce a deviation in the driving voltage and can have improved durability.

In addition, the method of fabricating the electrochromic element according to an embodiment includes a step of preparing a first laminate. The first laminate includes a first substrate, a first transparent electrode disposed on the first substrate and a first discoloration layer disposed on the first transparent electrode, wherein a decrease in the transmittance of the first laminate after 90 days is less than 5%.

In addition, a haze increase in the first laminate after 90 days can be less than 5%. In addition, a deviation in the transmittance of the first laminate after 90 days can be less than 0.2.

Accordingly, since the first laminate maintains its performance even when stored for a long time, the method of fabricating the electrochromic element according to an embodiment can provide an electrochromic element having improved optical properties.

In addition, since the first laminate maintains its performance even when stored for a long time, the method of fabricating the electrochromic element according to an embodiment can provide an electrochromic element having improved performance even if the transportation period of the first laminate and the second laminate takes a long time after the first laminate and the second laminate are manufactured.
Accordingly, the method of fabricating the electrochromic element according to an embodiment can provide an electrochromic element having improved performance even if the first laminate and the second laminate are manufactured separately at different times and/or spaces.
Accordingly, the method of fabricating the electrochromic element according to an embodiment can easily manufacture an electrochromic element having improved performance at a low cost.
In an embodiment, since the first laminate and the second laminate are transported in a semi-finished state, the first laminate and the second laminate can be easily wound and transported.
Accordingly, the method of fabricating the electrochromic element according to an embodiment can be an efficient and ease method.
In addition, the electrochromic element according to an embodiment includes a first laminate whose light transmittance change is 0.3 or less. Accordingly, the electrochromic element according to an embodiment can reduce a change in transmittance caused by external sunlight, etc.
That is, since the electrochromic element according to an embodiment can reduce a transmittance deviation due to external sunlight, it can easily control a target transmittance at the on-off time.
In addition, since the electrochromic element according to an embodiment includes a first laminate and first discoloration layer having a small haze change, a small change in L*, a small change in a* and a small change in b*, a change in the appearance due to external sunlight can be small. Accordingly, the electrochromic element according to an embodiment can have a consistent appearance even when the external environment changes.
In addition, since the electrochromic element according to an embodiment includes the electron-accepting material, it can have a buffering effect against external light and/or driving voltage. Accordingly, the electrochromic element according to an embodiment can have improved durability.
In particular, the electrochromic element according to an embodiment can be driven by a constant driving voltage because it reduces a transmittance change and appearance deviation due to external light. Accordingly, the electrochromic element according to an embodiment can reduce a deviation in the driving voltage and can have improved durability.

[Description of Drawings]

FIG. 1 is a sectional view illustrating the cross-section of an electrochromic element according to an embodiment.
FIGS. 2 to 5 are drawings illustrating processes of fabricating are drawings illustrating processes of fabricating the electrochromic element according to an embodiment.
FIG. 6 illustrates the sectional view of an electrochromic element according to another embodiment.
FIG. 7 is a sectional view illustrating one cross-section of the electrochromic element according to still another embodiment.
FIGS. 8 to 11 are drawings illustrating processes of fabricating an electrochromic element according to still another embodiment.
FIG. 12 is a sectional view illustrating one cross-section of the electrochromic element according to still another embodiment.
FIGS. 13 to 16 are drawings illustrating processes of fabricating the electrochromic element according to still another embodiment.
FIG. 17 illustrates a window device according to an embodiment.

[Best Mode]

In the description of embodiments, it will be understood that when each part, surface, layer or substrate is referred to as being "on" or "under" another part, surface, layer or substrate, the part, surface, layer or substrate can be directly on another part, surface, layer or substrate or intervening part, surface, layer or substrate, and criteria for "on" and "under" will be provided based on the drawings. Elements in the following drawings may be exaggerated, omitted, or schematically illustrated for conveniences and clarity of explanation, and the sizes of elements do not reflect their actual sizes completely.
FIG. 1 is a sectional view illustrating the cross-section of an electrochromic element according to an embodiment.
Referring to FIG. 1, the electrochromic element according to an embodiment includes a first substrate 100, a second substrate 200 and an electrochromic part 11 disposed between the first substrate 100 and the second substrate

200.

The electrochromic part 11 includes a first transparent electrode 300, a second transparent electrode 400, a first discoloration layer 500, photoelectron reduction layer 800, a second discoloration layer 600 and an electrolyte layer 700.

Together with the second substrate 200, the first substrate 100 supports the electrochromic part 11.

Together with the second substrate 200, the first substrate 100 supports the first transparent electrode 300, the first discoloration layer 500, the second discoloration layer 600, the second transparent electrode 400, the photoelectron reduction layer 800 and the electrolyte layer 700.

In addition, the first transparent electrode 300, the first discoloration layer 500, the second discoloration layer 600, the second transparent electrode 400, the photoelectron reduction layer 800 and the electrolyte layer 700 are sandwiched between the first substrate 100 and the second substrate 200. Together with the second substrate 200, the first substrate 100 may protect the first transparent electrode 300, the first discoloration layer 500, the second discoloration layer 600, the second transparent electrode 400, the photoelectron reduction layer 800 and the electrolyte layer 700 from external physical impact and chemical impact.

The first substrate 100 may include a polymer resin. The first substrate 100 may include at least one selected from the group consisting of a polyester-based resin, a polyimide-based resin, a cyclic olefin polymer resin, a polyethersulfone, a polycarbonate and a polyolefin-based resin.

The first substrate 100 may include a polyester resin as a main component. The first substrate 100 may include polyethylene terephthalate. The first substrate 100 may include the polyethylene terephthalate in a content of about 90 wt% or more based on the total composition amount. The first substrate 100 may include the polyethylene terephthalate in a content of about 95 wt% or more based on the total composition amount. The first substrate 100 may include the polyethylene terephthalate in a content of about 97 wt% or more based on the total composition amount. The first substrate 100 may include the polyethylene terephthalate in a content of about 98 wt% or more based on the total composition amount.

The first substrate 100 may include a uniaxially or biaxially stretched polyethylene terephthalate film. The first substrate 100 may include a polyethylene terephthalate film stretched about 2 to about 5 times in a longitudinal direction and/or width direction.

The first substrate 100 may have high mechanical properties to reinforce glass of the window when applied to a window of a building or a vehicle.

The first substrate 100 may have a tensile strength of about 7 $kgf/mm^2$ to about 40 $kgf/mm^2$ in the longitudinal direction. The first substrate 100 may have a tensile strength of about 8 $kgf/mm^2$ to about 35 $kgf/mm^2$ in the longitudinal direction.

The first substrate 100 may have a tensile strength of about 7 $kgf/mm^2$ to about 40 $kgf/mm^2$ in the width direction. The first substrate 100 may have a tensile strength of about 8 $kgf/mm^2$ to about 35 $kgf/mm^2$ in the width direction.

The first substrate 100 may have a modulus of about 200 $kgf/mm^2$ to about 400 $kgf/mm^2$ in the longitudinal direction. The first substrate 100 may have a modulus of about 250 $kgf/mm^2$ to about 350 $kgf/mm^2$ in the longitudinal direction. The first substrate 100 may have a modulus of about 250 $kgf/mm^2$ to about 270 $kgf/mm^2$ in the longitudinal direction.

The first substrate 100 may have a modulus of about 200 $kgf/mm^2$ to about 400 $kgf/mm^2$ in the width direction. The first substrate 100 may have a modulus of about 250 $kgf/mm^2$ to about 350 $kgf/mm^2$ in the width direction. The first substrate 100 may have a modulus of about 250 $kgf/mm^2$ to about 270 $kgf/mm^2$ in the width direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The first substrate 100 may have a fracture elongation of about 30% to about 150% in the longitudinal direction. The first substrate 100 may have a fracture elongation of about 30% to about 130% in the longitudinal direction. The first substrate 100 may have a fracture elongation of about 40% to about 120% in the longitudinal direction.

The first substrate 100 may have a fracture elongation of about 30% to about 150% in the width direction. The first substrate 100 may have a fracture elongation of about 30% to about 130% in the width direction. The first substrate 100 may have a fracture elongation of about 40% to about 120% in the width direction.

The modulus, the fracture elongation and the tensile strength may be measured according to KS B 5521.

In addition, the modulus, the tensile strength and the fracture elongation may be measured according to ASTM D882.

Since the first substrate 100 has the improved mechanical strength as described above, it may efficiently protect the first transparent electrode 300, the second transparent electrode 400, the first discoloration layer 500, the second discoloration layer 600 and the electrolyte layer 700. In addition, since the first substrate 100 has the improved mechanical strength as described above, the mechanical strength of the mechanical strength of glass to be attached may be effectively reinforced.

The first substrate 100 may include glass. The first substrate 100 may be a glass substrate.

In addition, the first substrate 100 may have high chemical resistance. Accordingly, even if an electrolyte contained in the first substrate 100 leaks, damage to the surface of the first substrate 100 may be minimized.

The first substrate 100 may have improved optical properties. A total light transmittance of the first substrate 100 may be about 55% or more. The total light transmittance of the first substrate 100 may be about 70% or more. The total light transmittance of the first substrate 100 may be about 75% to about 99%. The total light transmittance of the first substrate 100 may be about 80% to about 99%.

A haze of the first substrate 100 may be less than about 20%. The haze of the first substrate 100 may be about 0.1% to about 20%. The haze of the first substrate 100 may be about 0.1% to about 10%. The haze of the first substrate 100 may be about 0.1% to about 7%.

The total light transmittance and the haze may be measured according to ASTM D 1003, etc.

Since the first substrate 100 has an appropriate total light transmittance and haze, the electrochromic element according to another embodiment may have improved optical properties. That is, since the first substrate 100 has an appropriate transmittance and haze, an improved appearance may be achieved by minimizing distortion of images from the outside while appropriately controlling a transmittance when the electrochromic element according to another embodiment is applied to a window.

In addition, the first substrate 100 may have an in-plane phase difference of about 100 nm to about 4000 nm. The first substrate 100 may have an in-plane phase difference of about 200 nm to about 3500 nm. The first substrate 100 may have an in-plane phase difference of about 200 nm to about 3000 nm.

The first substrate 100 may have an in-plane phase difference of about 7000 nm or more. The first substrate 100 may have an in-plane phase difference of about 7000 nm to about 50000 nm. The first substrate 100 may have an in-plane phase difference of about 8000 nm to about 20000 nm.

The in-plane phase difference may be derived from a refractive index and thickness according to the direction of the first substrate 100.

Since the first substrate 100 has the in-plane phase difference as described above, the electrochromic film according to an embodiment may have an improved appearance.

The thickness of the first substrate 100 may be about 10 μm to about 200 μm. The thickness of the first substrate 100 may be about 23 μm to about 150 μm. The thickness of the first substrate 100 may be about 30 μm to about 120 μm.

The first substrate 100 may include an organic filler or an inorganic filler. The organic or inorganic filler may function as an anti-blocking agent.

An average particle diameter of the filler may be about 0.1 μm to about 5 μm. The average particle diameter of the filler may be about 0.1 μm to about 3 μm. The average particle diameter of the filler may be about 0.1 μm to about 1 μm.

The filler may be at least one selected from the group consisting of silica particles, barium sulfate particles, alumina particles and titania particles.

In addition, the filler may be included in the first substrate 100 in a content of about 0.01 wt% to about 3 wt% based on the total amount of the first substrate 100. The filler may be included in the first substrate 100 in a content of about 0.05 wt% to about 2 wt% based on the total amount of the first substrate 100.

The first substrate 100 may have a single-layer structure. For example, the first substrate 100 may be a single-layer polyester film.

The first substrate 100 may have a multi-layer structure. For example, the first substrate 100 may be a multi-layer co-extruded film. The multi-layer co-extruded structure may include a center layer, a first surface layer and a second surface layer. The filler may be included in the first surface layer and the second surface layer.

The second substrate 200 faces the first substrate 100. The second substrate 200 is disposed on the first substrate 100. One end of the second substrate 200 may be disposed to be misaligned with one end of the first substrate 100. The other end of the second substrate 200 may be disposed to be misaligned with the other end of the first substrate 100.

The second substrate 200 supports together with the first substrate 100, the first transparent electrode 300, the first discoloration layer 500, the second discoloration layer 600, the second transparent electrode 400, the photoelectron reduction layer 800 and the electrolyte layer 700.

In addition, the first transparent electrode 300, the first discoloration layer 500, the second discoloration layer 600, the second transparent electrode 400, the photoelectron reduction layer 800 and the electrolyte layer 700 are sandwiched between the second substrate 200 and the first substrate 100. Together with the first substrate 100, the second substrate 200 may protect the first transparent electrode 300, the first discoloration layer 500, the second discoloration layer 600, the second transparent electrode 400, the photoelectron reduction layer 800 and the electrolyte layer 700 from external physical impact and chemical impact.

The second substrate 200 may include a polymer resin. The second substrate 200 may include at least one selected from the group consisting of a polyester-based resin, a polyimide-based resin, a cyclic olefin polymer resin, a polyethersulfone, a polycarbonate or a polyolefin-based resin.

The second substrate 200 may include a polyester resin as a main component. The second substrate 200 may

include polyethylene terephthalate. The second substrate 200 may include the polyethylene terephthalate in a content of about 90 wt% or more based on the total composition amount. The second substrate 200 may include the polyethylene terephthalate in a content of about 95 wt% or more based on the total composition amount. The second substrate 200 may include the polyethylene terephthalate in a content of about 97 wt% or more based on the total composition amount. The second substrate 200 may include the polyethylene terephthalate in a content of about 98 wt% or more based on the total composition amount.

The second substrate 200 may include a uniaxially or biaxially stretched polyethylene terephthalate film. The second substrate 200 may include a polyethylene terephthalate film stretched about 2 to about 5 times in a longitudinal direction and/or width direction.

The second substrate 200 may have high mechanical properties to reinforce the glass when applied to a window of a building or a vehicle.

The second substrate 200 may have a tensile strength of about 7 $kgf/mm^2$ to about 40 $kgf/mm^2$ in the length direction. The second substrate 200 may have a tensile strength of about 8 $kgf/mm^2$ to about 35 $kgf/mm^2$ in the length direction.

The second substrate 200 may have a tensile strength of about 7 $kgf/mm^2$ to about 40 $kgf/mm^2$ in the width direction. The second substrate 200 may have a tensile strength of about 8 $kgf/mm^2$ to about 35 $kgf/mm^2$ in the width direction.

The second substrate 200 may have a modulus of about 200 $kgf/mm^2$ to about 400 $kgf/mm^2$ in the length direction. The second substrate 200 may have a modulus of about 250 $kgf/mm^2$ to about 350 $kgf/mm^2$ in the length direction. The second substrate 200 may have a modulus of about 250 $kgf/mm^2$ to about 270 $kgf/mm^2$ in the length direction.

The second substrate 200 may have a modulus of about 200 $kgf/mm^2$ to about 400 $kgf/mm^2$ in the width direction. The second substrate 200 may have a modulus of about 250 $kgf/mm^2$ to about 350 $kgf/mm^2$ in the width direction. The second substrate 200 may have a modulus of about 250 $kgf/mm^2$ to about 270 $kgf/mm^2$ in the width direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the length direction. The second substrate 200 may have a fracture elongation of about 30% to about 130% in the length direction. The second substrate 200 may have a fracture elongation of about 40% to about 120% in the length direction.

The second substrate 200 may have a fracture elongation of about 30% to about 150% in the width direction. The second substrate 200 may have a fracture elongation of about 30% to about 130% in the width direction. The second substrate 200 may have a fracture elongation of about 40% to about 120% in the width direction.

Since the second substrate 200 has the improved mechanical strength as described above, it may efficiently protect the first transparent electrode 300, the second transparent electrode 400, the first discoloration layer 500, the second discoloration layer 600 and the electrolyte layer 700. In addition, since the second substrate 200 has the improved mechanical strength as described above, the mechanical strength of the mechanical strength of glass to be attached may be effectively reinforced.

In addition, the second substrate 200 may have high chemical resistance. Accordingly, even if an electrolyte contained in the second substrate 200 leaks, damage to the surface of the second substrate 200 may be minimized.

The second substrate 200 may have improved optical properties. The second substrate 200 may have a total light transmittance of about 55% or more. The second substrate 200 may have a total light transmittance of about 70% or more. The second substrate 200 may have a total light transmittance of about 75% to about 99%. The second substrate 200 may have a total light transmittance of about 80% to about 99%.

A haze of the second substrate 200 may be less than about 20%. The haze of the second substrate 200 may be about 0.1% to about 20%. The haze of the second substrate 200 may be about 0.1% to about 10%. The haze of the second substrate 200 may be about 0.1% to about 7%.

Since the second substrate 200 has an appropriate total light transmittance and haze, the electrochromic element according to another embodiment may have improved optical properties. That is, since the second substrate 200 has an appropriate transmittance and haze, an improved appearance may be achieved by minimizing distortion of images from the outside while appropriately controlling a transmittance when the electrochromic element according to another embodiment is applied to a window.

In addition, the second substrate 200 may have an in-plane phase difference of about 100 nm to about 4000 nm. The second substrate 20 may have an in-plane phase difference of about 200 nm to about 3500 nm. The second substrate 200 may have an in-plane phase difference of about 200 nm to about 3000 nm.

The second substrate 200 may have an in-plane phase difference of about 7000 nm or more. The second substrate 200 may have an in-plane phase difference of about 7000 nm to about 50000 nm. The second substrate 200 may have an in-plane phase difference of about 8000 nm to about 20000 nm.

The in-plane phase difference may be derived from a refractive index and thickness according to the direction of the second substrate 200.

Since the second substrate 200 has the in-plane phase difference as described above, the electrochromic element according to an embodiment may have improved appearance.

The thickness of the second substrate 200 may be about 10 μm to about 200 μm. The thickness of the first substrate 100 may be about 23 μm to about 150 μm. The thickness of the first substrate 100 may be about 30 μm to about 120 μm.

The second substrate 200 may include an organic filler or an inorganic filler. The organic or inorganic filler may function as an anti-blocking agent.

An average particle diameter of the filler may be about 0.1 μm to about 5 μm The average particle diameter of the filler may be about 0.1 μm to about 3 μm. The average particle diameter of the filler may be about 0.1 μm to about 1 μm.

The filler may be at least one selected from the group consisting of silica particles, barium sulfate particles, alumina particles and titania particles.

In addition, the filler may be included in the second substrate 200 in a content of about 0.01 wt% to about 3 wt% of the total amount of the second substrate 200. The filler may be included in the second substrate 200 in a content of about 0.05 wt% to about 2 wt% of the total amount of the second substrate 200.

The second substrate 200 may have a single-layer structure. For example, the second substrate 200 may be a single-layer polyester film.

The second substrate 200 may have a multi-layer structure. For example, the second substrate 200 may be a multi-layer co-extruded film.

The first substrate 100 and the second substrate 200 may be flexible. Accordingly, Accordingly, the electrochromic element according to another embodiment may be flexible overall.

The first transparent electrode 300 is disposed on the first substrate 100. The first transparent electrode 300 may be deposited on the first substrate 100. In addition, a hard coating layer may be further included between the first transparent electrode 300 and the first substrate 100.

The first transparent electrode 300 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the first transparent electrode 300 may include graphene, silver nanowires and/or metal mesh.

The first transparent electrode 300 may have a total light transmittance of about 80% or more. The first transparent electrode 300 may have a total light transmittance of about 85% or more. The first transparent electrode 300 may have a total light transmittance of about 88% or more.

The first transparent electrode 300 may have a haze of less than about 10%. The first transparent electrode 300 may have a haze of less than about 7%. The first transparent electrode 300 may have a haze of less than about 5%.

The first transparent electrode 300 may have a haze of about 10% or less. The first transparent electrode 300 may have a haze of about 7% or less. The first transparent electrode 300 may have a haze of about 5% or less.

A surface resistance of the first transparent electrode 300 may be about 1 Ω/sq to 60 Ω/sq The surface resistance of the first transparent electrode 300 may be about 1 Ω/sq to 40 Ω/sq. The surface resistance of the first transparent electrode 300 may be about 1 Ω/sq to 30 Ω/sq.

The first transparent electrode 300 is electrically connected to the first discoloration layer 500. In addition, the first transparent electrode 300 is electrically connected to the electrolyte layer 700 through the first discoloration layer 500.

The second transparent electrode 400 is disposed under the second substrate 200. The second transparent electrode 400 may be deposited on the second substrate 200. In addition, a hard coating layer may further included between the second transparent electrode 400 and the second substrate 200.

The second transparent electrode 400 may include at least one selected from the group consisting of tin oxide, zinc oxide, silver (Ag), chromium (Cr), indium tin oxide (ITO), fluorine-doped tin oxide (FTO), aluminum-doped zinc oxide (AZO), gallium-doped zinc oxide (GZO), antimony-doped tin oxide (ATO), indium zinc oxide (IZO), niobium-doped titanium oxide (NTO) and cadmium tin oxide (CTO).

In addition, the second transparent electrode 400 may include graphene, silver nanowires and/or metal mesh.

The second transparent electrode 400 may have a total light transmittance of about 80% or more. The second transparent electrode 400 may have a total light transmittance of about 85% or more. The second transparent electrode 400 may have a total light transmittance of about 88% or more.

The second transparent electrode 400 may have a haze of less than about 10%. The second transparent electrode 400 may have a haze of less than about 7%. The second transparent electrode 400 may have a haze of less than about 5%.

The surface resistance of the second transparent electrode 400 may be about 1 Ω/sq to 60 Ω/sq. The surface resistance of the second transparent electrode 400 may be about 1 Ω/sq to 40 Ω/sq. The surface resistance of the second

transparent electrode 400 may be about 1 Ω/sq to 30 Ω/sq.

The thickness of the second transparent electrode 400 may be about 50 nm to about 50 μm. The thickness of the second transparent electrode 400 may be about 100 nm to about 10 μm. The thickness of the second transparent electrode 400 may be about 150 nm to about 5 μm.

The second transparent electrode 400 is electrically connected to the second discoloration layer 600. In addition, the second transparent electrode 400 is electrically connected to the electrolyte layer 700 through the second discoloration layer 600.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may be directly accessed to the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color is changed when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having an average particle diameter of about 1 nm to about 200 nm. An average particle diameter of the first electrochromic material may be about 5 nm to about 100 nm. The average particle diameter of the first electrochromic material may be about 10 nm to about 50 nm.

The first discoloration layer 500 may include the first electrochromic material in a content of about 70 wt% to about 98 wt% based on the total weight of based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

Since the first discoloration layer 500 includes the first electrochromic material in the average particle diameter range and weight range described above, the electrochromic element according to an embodiment may have improved optical properties and electrochromic properties.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 5 wt% to 15 wt% based on the total weight of the first discoloration layer 500. The first discoloration layer 500 may include the binder in a content of about 7 wt% to 13 wt% based on the total weight of the first discoloration layer 500.

The photoelectron reduction layer 800 is disposed on the first discoloration layer 500. The photoelectron reduction layer 800? is disposed on the first discoloration layer 500. The photoelectron reduction layer 800 may be directly disposed on the upper surface of the first discoloration layer 500. The photoelectron reduction layer 800 may be in direct contact with the upper surface of the first discoloration layer 500.

The photoelectron reduction layer 800 is disposed under the electrolyte layer 700. The photoelectron reduction layer 800 is disposed between the first discoloration layer 500 and the electrolyte layer 700. The photoelectron reduction layer 800 is brought into direct contact with the lower surface of the electrolyte layer 700. The photoelectron reduction layer 800 is electrically connected to the first discoloration layer 500 and the electrolyte layer 700.

The photoelectron reduction layer 800 further includes an electron-accepting material. The electron-accepting material may accept electrons generated from the first electrochromic material.

The electron-accepting material may include at least one selected from the group consisting of carbon black, carbon nanotubes and graphene.

The photoelectron reduction layer 800 may include the electron-accepting material in the form of particles. An average particle diameter of the electron-accepting material may be about 1 nm to about 200 nm. The average particle diameter of the electron-accepting material may be about 5 nm to about 100 nm. The average particle diameter of the electron-accepting material may be about 10 nm to about 50 nm.

Average particle diameters of the first electrochromic material and the electron-accepting material may be measured by dynamic light scattering. In addition, the average particle diameters of the first electrochromic material and the electron-accepting material may be D50 average particle diameters.

A nitrogen adsorption surface area of the electron-accepting material may be about 50 $m^2/g$ to about 200 $m^2/g$.

The nitrogen adsorption surface area of the electron-accepting material may be about 70 $m^2/g$ to about 150 $m^2/g$. The nitrogen adsorption surface area may be a specific surface area calculated by a low-temperature nitrogen adsorption method (JIS K6217).

A tinting strength of the electron-accepting material may be about 100% to about 150%. The tinting strength of the electron-accepting material may be measured according to JIS K6217.

Oil adsorption of the electron-accepting material may be about 50 $cm^3$/100 g to about 150 $cm^3$/100 g. The oil adsorption of the electron-accepting material may be measured according to JIS K6221.

An acid value (pH value) of the electron-accepting material may be about 3.0 to about 4.0. The acid value of the electron-accepting material may be measured by a glass electrode pH meter after the electron-accepting material is mixed with distilled water.

The photoelectron reduction layer 800 may include the electron-accepting material in a content of about 80 wt% to 99 wt% based on the total weight of the photoelectron reduction layer 800. The photoelectron reduction layer 800 may include the electron-accepting material in a content of about 85 wt% to about 95 wt% based on the total weight of the photoelectron reduction layer 800. The photoelectron reduction layer 800 may include the electron-accepting material in a content of about 87 wt% to 93 wt% based on the total weight of the photoelectron reduction layer 800.

The photoelectron reduction layer 800 may further include the binder. The binder may be an inorganic binder. The binder may include a silica gel. The binder may be formed by a silica sol containing tetramethoxysilane or methyltrimethoxysilane.

The photoelectron reduction layer 800 may include the binder in a content of about 1 wt% to 20 wt% based on the total weight of the photoelectron reduction layer 800. The photoelectron reduction layer 800 may include the binder in a content of about 5 wt% to 15 wt% based on the total weight of the photoelectron reduction layer 800. The photoelectron reduction layer 800 may include the binder in a content of about 7 wt% to 13 wt% based on the total weight of the photoelectron reduction layer 800.

Since the photoelectron reduction layer 800 includes the electron-accepting material in the average particle diameter range and weight range described above, the electrochromic element according to an embodiment may have improved optical properties and electrochromic properties.

The electron-accepting material may have a smaller band gap than the first electrochromic material.

A band gap of the first electrochromic material may be about 2.0 eV to about 3.5 eV. The band gap of the first electrochromic material may be about 2.2 eV to about 3.2 eV. The band gap of the first electrochromic material may be about 2.3 eV to about 3.0 eV.

A band gap of the electron-accepting material may be about 1.0 eV to about 3.0 eV. The band gap of the electron-accepting material may be about 1.5 eV to about 2.6 eV. The band gap of the electron-accepting material may be about 1.8 eV to about 2.4 eV.

A difference between the conduction band of the first electrochromic material and the conduction band of the electron-accepting material may be less than about 0.5 eV. The difference between the conduction band of the first electrochromic material and the conduction band of the electron-accepting material may be less than about 0.4 eV. The difference between the conduction band of the first electrochromic material and the conduction band of the electron-accepting material may be less than about 0.3 eV.

When the first discoloration layer 500 is irradiated with external light such as sunlight, the first electrochromic material may be excited, and the first electrochromic material may undergo photochromism. Here, excited electrons of the first electrochromic material may be transferred to the photoelectron reduction layer 800. Accordingly, the electron-accepting material may suppress the photochromism of the first electrochromic material.

Electrons transferred to the photoelectron reduction layer 800 may be transferred to the first transparent electrode 300, etc.

A thickness of the photoelectron reduction layer 800 may be about 5 nm to about 200 nm. The thickness of the photoelectron reduction layer 800 may be about 5 nm to about 100 nm. The thickness of the photoelectron reduction layer 800 may be about 5 nm to about 50 nm.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may be directly accessed to the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm. That is, a diameter of second electrochromic particles included in the second discoloration layer 600 may be about 2 nm to about 150 nm. The diameter of the second electrochromic particles may be about 5 nm to about 100 nm. The diameter of the second electrochromic particles may be about 10 nm to about 50 nm.

In addition, the second discoloration layer 600 may further include the binder.

The second substrate 200, the second transparent electrode 400 and the second discoloration layer 600 are included in a second laminate. That is, the second laminate includes the second substrate 200, the second transparent electrode 400 and the second discoloration layer 600. The second laminate may be composed of the second substrate 200, the second transparent electrode 400 and the second discoloration layer 600.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include a solid polymer electrolyte containing metal ions, an inorganic hydrate, etc. The electrolyte layer 700 may include lithium ions ($Li^+$), sodium ions ($Na^+$), potassium ions ($K^+$), and the like.

Specifically, poly-AMPS, PEO/$LiCF_3SO_3$, etc. may be used as the solid polymer electrolyte, and $Sb_2O_5 \cdot 4H_2O$, etc. may be used as the inorganic hydrate.

In addition, the electrolyte layer 700 is a configuration that provides electrolyte ions involved in an electrochromic reaction. The electrolyte ions may be, for example, monovalent cations such as $H^+$, $Li^+$, $Na^+$, $K^+$, $Rb^+$ or $Cs^+$.

The electrolyte layer 700 may include an electrolyte. For example, a liquid electrolyte, a gel polymer electrolyte, an inorganic solid electrolyte, etc. may be used as the electrolyte without limitation. In addition, the electrolyte may be used in the form of a single layer or film so as to be laminated together with the electrode or the substrate.

The type of electrolyte salt used in the electrolyte layer 700 is not particularly limited so long as it contains a compound capable of providing monovalent cations, i.e., $H^+$, $Li^+$, $Na^+$, $K^+$, $Rb^+$ or $Cs^+$. For example, the electrolyte layer 700 may include a lithium salt compound such as $LiClO_4$, $LiBF_4$, $LiAsF_6$, $LiPF_6$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$ or $(CF_3SO_2)_2NLi$; or a sodium salt compound such as $NaClO_4$.

As one example, the electrolyte layer 700 may include a Cl or F element-containing compound as an electrolyte salt. Specifically, the first electrolyte layer 410 may include one or more electrolyte salts selected from among $LiClO_4$, $LiBF_4$, $LiAsF_6$, $LiPF_6$, LiCl, $LiB_{10}Cl_{10}$, $LiCF_3SO_3$, $LiCF_3CO_2$, $LiAsF_6$, $LiSbF_6$, $LiAlCl_4$, $CF_3SO_3Li$, $(CF_3SO_2)_2NLi$ and $NaClO_4$.

The electrolyte may additionally include a carbonate compound as a solvent. Since a carbonate compound has a high dielectric constant, it may increase ionic conductivity. As a non-limiting example, a solvent such as propylene carbonate (PC), ethylene carbonate (EC), dimethyl carbonate (DMC), diethyl carbonate (DEC) or ethylmethyl carbonate (EMC) may be used as a carbonate compound.

As another example, when the electrolyte layer 700 includes a gel polymer electrolyte, the electrolyte layer 700 may include a polymer such as poly-vinyl sulfonic acid, poly-styrene sulfonic acid, polyethylene sulfonic acid, poly-2-acrylamido-2methyl-propane sulfonic acid, poly-perfluoro sulfonic acid, poly-toluene sulfonic acid, poly-vinyl alcohol, poly-ethylene imine, poly-vinyl pyrrolidone, poly-ethylene oxide (PEO), poly-propylene oxide (PPO), poly-(ethylene oxide (siloxane PEOS), poly-(ethylene glycol, siloxane), poly-(propylene oxide, siloxane), poly-(ethylene oxide, methyl methacrylate) (PEO-PMMA), poly-(ethylene oxide, acrylic acid) (PEO PAA), poly-(propylene glycol, methyl methacrylate) (PPG PMMA), poly-ethylene succinate or poly-ethylene adipate. In one example, a mixture of two or more of the listed polymers or two or more copolymers may be used as a polymer electrolyte.

In addition, the electrolyte layer 700 may include a curable resin that can be cured by ultraviolet irradiation or heat. The curable resin may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocurable initiator and/or a heat-curable initiator.

A thickness of the electrolyte layer 700 may be about 10 $\mu$m to about 200 $\mu$m. The thickness of the electrolyte layer 700 may be about 50 $\mu$m to about 150 $\mu$m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The electrochromic element according to an embodiment may further include a sealing part (not shown).

The sealing part includes a curable resin. The sealing part may include a thermosetting resin and/or a photocurable resin.

Examples of the thermosetting resin include epoxy resin, melamine resin, urea resin, unsaturated polyester resin, and the like. In addition, examples of the epoxy resin include phenol novolac-type epoxy resin, cresol novolac-type

epoxy resin, biphenyl novolac-type epoxy resin, trisphenol novolac-type epoxy resin, dicyclopentadiene novolac-type epoxy resin, bisphenol A-type epoxy resin, bisphenol F-type epoxy resin, 2, 2'-diarylbisphenol A-type epoxy resin, bisphenol S-type epoxy resin, hydrogenated bisphenol A-type epoxy resin, propylene oxide-added bisphenol A-type epoxy resin, biphenyl type epoxy resin, naphthalene-type epoxy resin, resorcinol-type epoxy resin, glycidyl amines, and the like.

In addition, the sealing part may further include a heat-curing agent. Examples of the sealing part include hydrazide compounds such as 1, 3-bis[hydrazinocarbonoethyl 5-isopropyl hydantoin], adipic acid (adipic acid) hydrazide; dicyandiamide, guanidine derivatives, 1-cyanoethyl-2-phenyl imidazole, N-[2-(2-methyl-1-imidazolyl) ethyl]urea, 2, 4-diamino-6-[2'-methylimidazolyl(1')]-ethyl-s-thoriazine, N,N'-bis(2-methyl-1-imidazolyl ethyl) urea, N, N'-(2-methyl-1-imidazolyl ethyl)-azipoamido, 2-phenyl-4-methyl-5-hydroxymethyl imidazole, 2-imidazoline-2-thiol, 2, 2'-thiodiethanethiol, additional products of various amines and epoxy resins, and the like.

The first sealing part may include a photocurable resin. Examples of the photocurable resin include acrylate-based resins such as urethane acrylate, and the like. In addition, the sealing part may further include a photocurable initiator. The photocurable initiator may be at least one selected from the group consisting of acetophenone-based compounds, benzophenone-based compounds, thioxanthone-based compounds, benzoin-based compounds, triazine-based compounds and oxime-based compounds.

In addition, the sealing part may further include a moisture absorbent such as zeolite and/or silica. In addition, the sealing part may further include an inorganic filler. The inorganic filler may have a material having high insulating nature, transparency and durability. Examples of the inorganic filler include silicon, aluminum, zirconia, a mixture thereof, and the like.

In addition, the electrochromic element according to an embodiment may further include a first bus bar (not shown) and a second bus bar (not shown).

The first bus bar may be disposed on the first transparent electrode 300. The first bus bar may be accessed to the first transparent electrode 300.

The first bus bar may be electrically connected to the first transparent electrode 300. The first bus bar may be in direct contact with the upper surface of the first transparent electrode 300. The first bus bar may be accessed to the first transparent electrode 300 through solder.

The second bus bar is disposed under the second transparent electrode 400. The second bus bar is accessed to the second transparent electrode 400.

The second bus bar may be electrically connected to the second transparent electrode 400. The second bus bar may be in direct contact with the lower surface of the second transparent electrode 400. The second bus bar may be accessed to the second transparent electrode 400 through solder.

The first bus bar and/or the second bus bar may include a metal. The first bus bar and/or the second bus bar may include a metal ribbon. The first bus bar and/or the second bus bar may include a conductive paste. The first bus bar and/or the second bus bar may include a binder and a conductive filler.

The electrochromic element according to an embodiment may be fabricated by the following method. FIGS. 2 to 5 are sectional views illustrating processes of fabricating the electrochromic element according to an embodiment.

Referring to FIG. 2, a first transparent electrode 300 is formed on a first substrate 100. The first transparent electrode 300 may be formed by a vacuum deposition process. A metal oxide such as indium tin oxide may be deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that a layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. A first sol solution including a first electrochromic material, a binder and a solvent may be coated on the layer of the first transparent electrode 300. A first sol solution including a first electrochromic material, an electron-accepting material, a binder and a solvent may be coated on the layer of the first transparent electrode 300.

The first sol solution may include the first electrochromic material in the form of particles in a content of about 5 wt% to about 30 wt% based on the total weight of the first sol solution. The first sol solution may include the binder in a content of about 0.5 wt% to about 5 wt% based on the total weight of the first sol solution. The first sol solution may include the solvent in a content of about 70 wt% to about 95 wt% based on the total weight of the first sol solution.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol,

hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 3, a photoelectron reduction layer 800 is formed on the first discoloration layer 500. To form the photoelectron reduction layer 800, a third sol solution is prepared.

The sol solution includes an electron-accepting material, a binder and a solvent.

The third sol solution may include the electron-accepting material in the form of particles in a content of about 5 wt% to about 30 wt% based on the total weight of the third sol solution. The third sol solution may include the binder in a content of about 0.5 wt% to about 5 wt% based on the total weight of the third sol solution. The third sol solution may include the solvent in a content of about 70 wt% to about 95 wt% based on the total weight of the third sol solution.

The third sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

The third sol solution is coated on the first discoloration layer 500. A sol-gel reaction occurs in the third sol solution coated on the first discoloration layer 500. Accordingly, the photoelectron-accepting layer is formed on the first discoloration layer 500.

Next, an electrolyte composition for forming an electrolyte layer 700 is formed.

The electrolyte composition may include a metal salt, an electrolyte, a photocuable resin and a photocuable initiator. The photocuable resin may be at least one selected from the group consisting of hexandiol diacrylate (HDDA), tripropylene glycoldiacrylate, ethylene glycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), and dipentaerythritol hexaacrylate (DPHA).

The metal salt, the electrolyte and the photocuable initiator may be the same as described above.

The electrolyte composition is coated on the photoelectron reduction layer 800. Accordingly, an electrolyte composition coating layer 701 is formed on the photoelectron reduction layer 800.

Referring to FIG. 4, a second transparent electrode 400 is formed on a second substrate 200.

The second transparent electrode 400 may be formed by a vacuum deposition process. A metal oxide such as indium tin oxide may be deposited on the second substrate 200 by a sputtering process, etc., thereby forming the second transparent electrode 400.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the layer of the second transparent electrode 400. The second discoloration layer 600 may be formed by a sol-gel coating process. A second sol solution including a second electrochromic material, a binder and a solvent may be coated on the layer of the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt% based on the total weight of the second sol solution. The second sol solution may include the binder in a content of about 0.5 wt% to about 5 wt% based on the total weight of the second sol solution. The second sol solution may include the solvent in a content of about 70 wt% to about 95 wt% based on the total weight of the second sol solution.

The second sol solution may additionally include a dispersant.

Referring to FIG. 5, the second substrate 200, the second transparent electrode 400 and the second discoloration layer 600 are laminated on the coated electrolyte composition layer 701. Here, the second discoloration layer 600 is brought into direct contact with the coated electrolyte composition layer 701.

Next, the coated electrolyte composition layer 701 is cured by light, a first laminate including the first substrate 100, the first transparent electrode 300 and the first discoloration layer 500 and a second laminate including the second substrate 200, the second transparent electrode 400 and the second discoloration layer 600 are laminated to each other.

That is, the first laminate and the second laminate may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 50% to about 90%. The light transmittance of the electrochromic element may be about 55% to about 88%. The light transmittance of the electrochromic element may be about 68% to about 86%.

The electrochromic element according to an embodiment may have a change in light transmittance. The change in light transmittance is a change in light transmittance after exposure to similar sunlight relative to an initial light transmittance.

The change in light transmittance may be measured Measurement Method 1 below:

[Measurement Method 1]

1) Before irradiation with the similar sunlight, the first light transmittance of the electrochromic element is measured.
2) Through the first substrate 100, the electrochromic part 11 is irradiated with the similar sunlight at an intensity of about 1000 W/$m^2$ for 10 minutes
3) After irradiation with the similar sunlight, the second light transmittance of the electrochromic element is measured.
4) The change in light transmittance is obtained by dividing a difference between the first light transmittance and the second light transmittance divided by the first light transmittance.

The change in light transmittance (ΔTR) may be represented by Equation 1 below:

[Equation 1]

$$\triangle TR = (T1 - T2) / T1$$

where T1 denotes the initial light transmittance of the electrochromic element, and T2 denotes the light transmittance of the electrochromic element after irradiating the first discoloration layer 500 with the similar sunlight at an intensity of about 1000 W/$m^2$ for 10 minutes through the first substrate 100.

The similar sunlight may be artificial light with a spectrum similar to that of sunlight. The similar sunlight may be implemented by a solar simulator.

The change in light transmittance of the electrochromic element according to an embodiment may be less than about 0.25. The change in light transmittance of the electrochromic element according to an embodiment may be about 0 to about 0.30. The change in light transmittance of the electrochromic element according to an embodiment may be about 0 to about 0.25. The change in light transmittance of the electrochromic element according to an embodiment may be about 0.01 to about 0.20. The change in light transmittance of the electrochromic element according to an embodiment may be about 0.02 to about 0.18. The change in light transmittance of the electrochromic element according to an embodiment may be about 0.03 to about 0.15.

The light transmittance of the electrochromic element according to an embodiment may be about 45% to about 90%. The light transmittance of the electrochromic element according to an embodiment may be about 50% to about 85%. The light transmittance of the electrochromic element according to an embodiment may be about 60% to about 80%.

The light transmittance of the electrochromic element according to an embodiment after being irradiated with the similar sunlight may be about 40% to about 80%. The light transmittance of the electrochromic element according to an embodiment after being irradiated with the similar sunlight may be about 45% to about 80%. The light transmittance of the electrochromic element according to an embodiment after being irradiated with the similar sunlight may be about 50% to about 70%.

The electrochromic element according to an embodiment has the change in light transmittance described above. Accordingly, the electrochromic element according to an embodiment may reduce a change in transmittance caused by external sunlight, etc.

That is, since the electrochromic element according to an embodiment may reduce a transmittance deviation due to external sunlight, it may easily control a target transmittance at the on-off time.

The electrochromic element according to an embodiment may have a haze.

The haze may refer to the haze of the electrochromic element according to an embodiment in a non-photochromic or non-electrochromic state.

The haze of the electrochromic element according to an embodiment may be less than about 5%. The haze of the electrochromic element according to an embodiment may be less than about 4%. The haze of the electrochromic element according to an embodiment may be less than about 3%. The haze of the electrochromic element according to an embodiment may be less than about 2%.
The electrochromic element according to an embodiment may have a haze change.
The haze change may be measured by Measurement Method 2 below:

[Measurement Method 2]

A first haze of the electrochromic element according to an embodiment is measured before irradiation with the similar sunlight, a second haze of the electrochromic element according to an embodiment is measured after irradiation with the similar sunlight, and the haze change is a value obtained by subtracting the first haze from the second haze.
The haze change of the electrochromic element according to an embodiment may be less than 5.5%. The haze change of the electrochromic element according to an embodiment may be less than 5%. The haze change of the electrochromic element according to an embodiment may be less than 4%. The haze change of the electrochromic element according to an embodiment may be less than 3%. The haze change of the electrochromic element according to an embodiment may be less than 2%.
In the electrochromic element according to an embodiment, the haze after irradiation with the similar sunlight may be less than about 6%. In the electrochromic element according to an embodiment, the haze after irradiation with the similar sunlight may be less than about 5%. In the electrochromic element according to an embodiment, the haze after irradiation with the similar sunlight may be less than about 4%. In the electrochromic element according to an embodiment, the haze after irradiation with the similar sunlight may be less than about 3%.
The light transmittance may be a total light transmittance. The total light transmittance may be a light transmittance in a wavelength range of about 380 nm to about 780 nm.
The light transmittance and the haze may be measured according to ASTM D1003.
The electrochromic element according to an embodiment may have L*, a* and b*.
The L* of the electrochromic element according to an embodiment may be about 70 to about 100. The L* of the electrochromic element according to an embodiment may be about 80 to about 100. The L* of the electrochromic element according to an embodiment may be about 91 to about 100. The L* may be measured in a state where the electrochromic element according to an embodiment is non-photochromic or non-electrochromic.
The L* of the electrochromic element according to an embodiment may be changed.
The change in L* may be measured by Measurement Method 3 below:

[Measurement Method 3]

First L* of the electrochromic element according to an embodiment is measured before irradiation with the similar sunlight, second L* of the electrochromic element according to an embodiment is measured after irradiation with the similar sunlight, and the change in L* is an absolute value of a difference between the second L* and the first L*.
The change in L* may be represented by Equation 2 below:

[Equation 2]

$$\text{Change in } L^* = \left| \text{second } L^* - \text{first } L^* \right|$$

The change in L* of the electrochromic element according to an embodiment may be less than 7. The change in L* of the electrochromic element may be less than 6. The change in L* of the electrochromic element according to an embodiment may be less than 5. The change in L* of the electrochromic element according to an embodiment may be less than 4.
The L* of the electrochromic element according to an embodiment after irradiation with the similar sunlight may be about 70 to about 95. The L* of the electrochromic element according to an embodiment after irradiation with the similar sunlight may be 76 to about 94.
The a* of the electrochromic element according to an embodiment may be -3 to 2. The a* of the electrochromic element according to an embodiment may be -2.5 to 1.5. The a* of the electrochromic element according to an embodiment may be -2 to 1. The a* may be measured in a state where the electrochromic element according to an embodiment is non-photochromic or non-electrochromic.
The a* of the electrochromic element according to an embodiment may be changed.
The change in a* may be measured by Measurement Method 4 below:

[Measurement Method 4]

The first a* of the electrochromic element according to an embodiment before irradiation with the similar sunlight is measured, the second a* of the electrochromic element according to an embodiment after irradiation with the similar sunlight is measured, and the change in a* is a value obtained by subtracting the first a* from the second a*.
The change in the a* of the electrochromic element according to an embodiment may be represented by Equation 3 below:

[Equation 3]

$$\text{Change in a*} = \left| \text{second a*} - \text{first a*} \right|$$

The change in the a* of the electrochromic element according to an embodiment may be less than 6. The change in the a* of the electrochromic element according to an embodiment may be less than 5. The change in the a* of the electrochromic element according to an embodiment may be less than 2. The change in the a* of the electrochromic element according to an embodiment may be less than 3. The change in the a* of the electrochromic element according to an embodiment may be less than 1.8. The change in the a* of the electrochromic element according to an embodiment may be less than 1.6. The change in the a* of the electrochromic element according to an embodiment may be less than 1.5.
The a* of the electrochromic element according to an embodiment after irradiation with the similar sunlight may be about -5 to about 0. The a* of the electrochromic element according to an embodiment after irradiation with the similar sunlight may be about -4.5 to about 0.
The b* of the electrochromic element according to an embodiment may be 0 to 4. The b* of the electrochromic element according to an embodiment may be 0.1 to 3.5. The b* of the electrochromic element according to an embodiment may be 0.5 to 3. The b* may be measured in a state where the electrochromic element according to an embodiment is non-photochromic or non-electrochromic.
The b* of the electrochromic element according to an embodiment may be changed.
The change in b* may be measured by Measurement Method 5 below:

[Measurement Method 5]

The first b* of the electrochromic element according to an embodiment before irradiation with the similar sunlight is measured, the second b* of the electrochromic element according to an embodiment after irradiation with the similar sunlight is measured, and the change in b* is a value obtained by subtracting the first b* from the second b*.
The change in b* may be calculated by Equation 4 below:

[Equation 4]

$$\text{Change in b*} = \left| \text{second b*} - \text{first b*} \right|$$

The change in the b* of the electrochromic element according to an embodiment may be less than 10. The change in the b* of the electrochromic element according to an embodiment may be less than 8. The change in the b* of the electrochromic element according to an embodiment may be less than 7. The change in the b* of the electrochromic element according to an embodiment may be less than 2.8. The change in the b* of the electrochromic element according to an embodiment may be less than 2.6. The change in the b* of the electrochromic element according to an embodiment may be less than 2.5.
The b* of the electrochromic element according to an embodiment after irradiation with the similar sunlight may be about -5 to about 3. The b* of the electrochromic element according to an embodiment after irradiation with the similar sunlight may be about -4.5 to about 2.
The L*, the a* and the b* may be measured using a colorimeter.
The electrochromic element according to an embodiment may have the haze changes described above. In addition, the electrochromic element according to an embodiment may have a change in the L*, a change in the a* and a change in the b*.
Accordingly, the electrochromic element according to an embodiment may reduce changes in appearance due to external sunlight. Accordingly, the electrochromic element according to an embodiment may have a consistent appearance even when the external environment changes.
In addition, since the electrochromic element according to an embodiment includes the electron-accepting

material, it may have a buffering effect against external light and driving voltage. Accordingly, the electrochromic element according to an embodiment may have improved durability.

FIG. 6 illustrates the sectional view of an electrochromic element according to another embodiment.

Referring to FIG. 6, a photoelectron reduction layer may be formed integrally with a first discoloration layer 501. The first discoloration layer 501 may include the electron-accepting material.

The first discoloration layer 501 is disposed on the first transparent electrode 300. The first discoloration layer 501 may be directly disposed on the upper surface of the first transparent electrode 300. The first discoloration layer 501 may be electrically directly connected to the first transparent electrode 300.

The first discoloration layer 501 is electrically connected to the first transparent electrode 300. The first discoloration layer 501 may be directly accessed to the first transparent electrode 300. In addition, the first discoloration layer 501 is electrically connected to the electrolyte layer 700. The first discoloration layer 501 may be electrically connected to the electrolyte layer 700.

The first discoloration layer 501 may be discolored when supplied with electrons. The first discoloration layer 501 may include a first electrochromic material whose color is changed when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 501 may include the first electrochromic material in the form of particles. The tungsten oxide, the niobium pentoxide, the vanadium pentoxide, the titanium oxide and the molybdenum oxide may be particles having an average particle diameter of about 1 nm to about 200 nm. The average particle diameter of the first electrochromic material may be about 5 nm to about 100 nm. The average particle diameter of the first electrochromic material may be about 10 nm to about 50 nm.

The first discoloration layer 501 may include the first electrochromic material in a content of about 70 wt% to about 98 wt% based on the total weight of the first discoloration layer 501. The first discoloration layer 501 may include the first electrochromic material in a content of about 80 wt% to about 96 wt% based on the total weight of the first discoloration layer 500. The first discoloration layer 501 may include the first electrochromic material in a content of about 85 wt% to about 94 wt% based on the total weight of the first discoloration layer 501.

Since the first discoloration layer 501 includes the first electrochromic material in the average particle diameter range and weight range described above, the first laminate and the electrochromic element according to an embodiment may have improved optical properties and electrochromic properties.

In addition, the first discoloration layer 501 may further include a binder. The binder may be an inorganic binder. The binder may include a silica gel. The binder may be formed by a silica sol containing tetramethoxysilane or methyltrimethoxysilane.

The first discoloration layer 501 may include the binder in a content of about 1 wt% to 20 wt% based on the total weight of the first discoloration layer 501. The first discoloration layer 501 may include the binder in a content of about 5 wt% to 15 wt% based on the total weight of the first discoloration layer 501. The first discoloration layer 501 may include the binder in a content of about 7 wt% to 13 wt% based on the total weight of the first discoloration layer 501.

The first discoloration layer 501 further includes an electron-accepting material. The electron-accepting material may accept electrons generated from the first electrochromic material.

The electron-accepting material may include at least one selected from the group consisting of carbon black, carbon nanotubes and graphene.

The first discoloration layer 501 may include the electron-accepting material in the form of particles. The average particle diameter of the electron-accepting material may be about 1 nm to about 200 nm. The average particle diameter of the electron-accepting material may be about 5 nm to about 100 nm. The average particle diameter of the electron-accepting material may be about 10 nm to about 50 nm.

The average particle diameters of the first electrochromic material and the electron-accepting material may be measured by dynamic light scattering. In addition, the average particle diameters of the first electrochromic material and the electron-accepting material may be D50 average particle diameters.

The nitrogen adsorption surface area of the electron-accepting material may be about 50 $m^2/g$ to about 200 $m^2/g$. The nitrogen adsorption surface area of the electron-accepting material may be about 70 $m^2/g$ to about 150 $m^2/g$. The nitrogen adsorption surface area may be a specific surface area calculated by a low-temperature nitrogen adsorption method (JIS K6217).

The tinting strength of the electron-accepting material may be about 100% to about 150%. The tinting strength of the electron-accepting material may be measured according to JIS K6217.

The oil adsorption of the electron-accepting material may be about 50 $cm^3/100$ g to about 150$cm^3/100$ g. The oil adsorption of the electron-accepting material may be measured according to JIS K6221.

The acid value (pH value) of the electron-accepting material may be about 3.0 to about 4.0. The acid value of the electron-accepting material may be measured by a glass electrode pH meter after the electron-accepting material is mixed with distilled water.

The first discoloration layer 501 may include the electron-accepting material in a content of about 0.5 wt% to 7 wt% based on the total weight of the first discoloration layer 501. The first discoloration layer 501 may include the electron-accepting material in a content of about 0.7 wt% to 5 wt% based on the total weight of the first discoloration layer 501. The first discoloration layer 501 may include the electron-accepting material in a content of about 0.8 wt% to 3 wt% based on the total weight of the first discoloration layer 500.

Since the first discoloration layer 501 includes the electron-accepting material in the average particle diameter range and weight range described above, the electrochromic element according to an embodiment may have improved optical properties and electrochromic properties.

In the first discoloration layer 501, a weight ratio of the first electrochromic material to the electron-accepting material may be about 20:1 to about 5:1. In the first discoloration layer 501, the weight ratio of the first electrochromic material to the electron-accepting material may be about 15:1 to about 8:1. In the first discoloration layer 501, the weight ratio of the first electrochromic material to the electron-accepting material may be about 13:1 to about 7:1.

In addition, a ratio of the average particle diameter of the first electrochromic material to the average particle diameter of the electron-accepting material may be about 0.7:1 to about 1.5:1. The ratio of the average particle diameter of the first electrochromic material to the average particle diameter of the electron-accepting material may be about 0.8:1 to about 1.4:1.

Since the first electrochromic material and the electron-accepting material have the weight ratio and average particle diameter ratio described above, the first laminate and the electrochromic element according to an embodiment may have improved optical properties and electrochromic properties.

The electron-accepting material may have a smaller band gap than the first electrochromic material.

The band gap of the first electrochromic material may be about 2.0 eV to about 3.5 eV. The band gap of the first electrochromic material may be about 2.2 eV to about 3.2 eV. The band gap of the first electrochromic material may be about 2.3 eV to about 3.0 eV.

The band gap of the electron-accepting material may be about 1.0 eV to about 3.0 eV. The band gap of the electron-accepting material may be about 1.5 eV to about 2.6 eV. The band gap of the electron-accepting material may be about 1.8 eV to about 2.4 eV.

The difference between the conduction band of the first electrochromic material and the conduction band of the electron-accepting material may be about 0.5 eV or less. The difference between the conduction band of the first electrochromic material and the conduction band of the electron-accepting material may be about 0.4 eV or less. The difference between the conduction band of the first electrochromic material and the conduction band of the electron-accepting material may be about 0.3 eV or less.

When the first discoloration layer 501 is irradiated with external light such as sunlight, the first electrochromic material may be excited, and the first electrochromic material may undergo photochromism. Here, since the electron-accepting material is arranged around the first electrochromic material, excited electrons of the first electrochromic material may be transferred to the electron-accepting material. Accordingly, the electron-accepting material may suppress the photochromism of the first electrochromic material.

Electrons transferred to the electron-accepting material may be transferred to the first transparent electrode 300, etc.

The change in the light transmittance of the electrochromic element according to an embodiment is less than 0.25. Accordingly, the electrochromic element according to an embodiment may reduce changes in transmittance caused by external environments such as external sunlight.

That is, since the electrochromic element according to an embodiment may reduce a transmittance deviation due to external sunlight, it may easily control a target transmittance at the on-off time.

In addition, since the electrochromic element according to an embodiment includes the first laminate and first discoloration layer having a small change in haze, a small change in L*, a small change in a* and a small change in b*, a change in the appearance due to external sunlight may be small. Accordingly, the electrochromic element according to an embodiment may have a consistent appearance even when the external environment changes.

In addition, since the electrochromic element according to an embodiment includes the electron-accepting material, it may have a buffering effect against external light and/or driving voltage. Accordingly, the electrochromic element according to an embodiment may have improved durability.

In particular, the electrochromic element according to an embodiment may be driven by a constant driving voltage because it reduces a transmittance change and appearance deviation due to external light. Accordingly, the electrochromic element according to an embodiment may reduce a deviation in the driving voltage and may have improved durability.

FIG. 7 is a sectional view illustrating the cross-section of an electrochromic element according to still another embodiment. In the description of this embodiment, the description of the preceding embodiments may be referred to. That is, the description of the preceding embodiments may be essentially combined with the description of this embodiment, except for the parts that are changed.

Referring to FIG. 7, the electrochromic element according to an embodiment includes a first laminate 12 and a second laminate 13. The second laminate 13 is disposed on the first laminate 12. The second laminate 13 is laminated on the first laminate 12.

The first laminate 12 includes a first substrate 100, a first transparent electrode 300 and a first discoloration layer 500. The second laminate 13 includes a second substrate 200, a second transparent electrode 400, a second discoloration layer 600 and an electrolyte layer 700.

Together with the second substrate 200, the first substrate 100 supports the first transparent electrode 300, the first discoloration layer 500, the second discoloration layer 600, the second transparent electrode 400 and the electrolyte layer 700.

The second substrate 200 faces the first substrate 100. The second substrate 200 is disposed on the first substrate 100. One end of the second substrate 200 may be disposed so as to be misaligned with one end of the first substrate 100. The other end of the second substrate 200 may be disposed so as to be misaligned with the other end of the first substrate 100.

Together with the first substrate 100, the second substrate 200 supports the first transparent electrode 300, the first discoloration layer 500, the second discoloration layer 600, the second transparent electrode 400 and the electrolyte layer 700.

The first transparent electrode 300 is disposed on the first substrate 100. The first transparent electrode 300 may be deposited on the first substrate 100. In addition, a hard coating layer may be further included between the first transparent electrode 300 and the first substrate 100.

The second transparent electrode 400 is disposed under the second substrate 200. The second transparent electrode 400 may be deposited on the second substrate 200. In addition, a hard coating layer may further included between the second transparent electrode 400 and the second substrate 200.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may be directly accessed to the first transparent electrode 300. In addition, the first discoloration layer 500 is electrically connected to the electrolyte layer 700. The first discoloration layer 500 may be electrically connected to the electrolyte layer 700.

The first discoloration layer 500 may include the first electrochromic material in the form of particles. The tungsten oxide, the niobium pentoxide, the vanadium pentoxide, the titanium oxide and the molybdenum oxide may be particles having a particle diameter of about 1nm to about 200 nm. That is, the diameter of first electrochromic particles included in the first discoloration layer 500 may be about 2 nm to about 150 nm. The diameter of the first electrochromic particles included in the first discoloration layer 500 may be about 5 nm to about 100 nm. The diameter of the first electrochromic particles included in the first discoloration layer 500 may be about 10 nm to about 50 nm.

The first discoloration layer 500 may be discolored when supplied with electrons. The first discoloration layer 500 may include a first electrochromic material whose color is changed when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first electrochromic material may include at least one selected from the group consisting of tungsten oxide, niobium pentoxide, vanadium pentoxide, titanium oxide and molybdenum oxide.

The first electrochromic material may include tungsten oxide.

The first electrochromic material may include a dopant.

The dopant may be at least one selected from the group consisting of aluminum, iron, calcium, magnesium, potassium, sodium, silicon element, copper, manganese, lead, bismuth, antimony, tin, chromium and cobalt.

The first electrochromic material may include the dopant in a content of about 0.1 ppm to about 2000 ppm based on the weight of the first electrochromic material. The first electrochromic material may include the dopant in a content of about 1 ppm to about 1000 ppm based on the weight of the first electrochromic material. The first electrochromic material may include the dopant in a content of about 1 ppm to about 500 ppm based on the weight of the first electrochromic material.

Iron may be included in a content of about 0.1 ppm to about 200 ppm based on the total weight of the first electrochromic material. Iron may be included in a content of about 0.1 ppm to about 100 ppm based on the total weight of the first electrochromic material.

A silicon element may be included in a content of about 0.1 ppm to about 200 ppm based on the total weight of the first electrochromic material. , A silicon element may be included in a content of about 0.1 ppm to about 100 ppm based on the total weight of the first electrochromic material.

Copper may be included in a content of about 0.1 ppm to about 200 ppm based on the total weight of the first electrochromic material. Copper may be included in a content of about 0.1 ppm to about 100 ppm based on the total weight

of the first electrochromic material.

The first electrochromic material may be represented by Chemical Formula 1 below:

[Chemical Formula 1] $M_xW_yO_z$

where M is at least one selected from the group consisting of aluminum, iron, calcium, magnesium, potassium, sodium, silicon element, copper, manganese, lead, bismuth, antimony, tin, chromium and cobalt, x is 0.0000001 to 0.0001, y is 0.9999 to 1.0001, and z is 0.9997 to 1.0003.

Since the first electrochromic material includes the dopant in the above range, it may have improved electrochromic properties. In addition, since the first electrochromic material includes the dopant in the range, it may have improved long-term durability. In addition, since the first electrochromic material includes the dopant in the above range, it may have improved light resistance.

The tungsten oxide represented by Chemical Formula 1 may be prepared by the following method. A tungsten ($CaWO_4$) concentrate is subjected to a tungsten extraction and deodorization process by a solvent extraction method to crystallize it into ammonium paratungstate (APT), $5(NH_4)_2O \cdot 2WO_3$), and then decomposed.

In addition, the tungsten oxide represented by Chemical Formula 1 may be prepared by the following method.

A method of preparing the tungsten oxide may include a step of preparing tungsten acid ($H_2WO_4$) while controlling the pH of a mixture of a tungsten concentrate and an inorganic acid to a pH range of 4 or less; and a step of heat-treating the prepared tungsten acid ($H_2WO_4$) at about 350°C to about 650°C.

In addition, the prepared tungsten acid may be subjected to a step S30 of removing impurities through filtering as needed. In the filtering step, calcium chloride may be removed.

In addition, in the process of preparing tungsten acid, a metal component for forming the dopant may be added to the inorganic acid.

Accordingly, the tungsten oxide represented by Chemical Formula 1 may be prepared. To implement the method of preparing the tungsten oxide, Korean Patent Publication No. 10-2016-0101297 may be combined with this embodiment.

The first discoloration layer 500 may include the first electrochromic material in a content of about 70 wt% to about 98 wt% based on the total weight of the first discoloration layer 500. The first discoloration layer 500 may include the first electrochromic material in a content of about 80 wt% to about 96 wt% based on the total weight of the first discoloration layer 500. The first discoloration layer 500 may include the first electrochromic material in a content of about 85 wt% to about 94 wt% based on the total weight of the first discoloration layer 500.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 2 wt% to 15 wt% based on the total weight of the first discoloration layer 500. The first discoloration layer 500 may include the binder in a content of about 3 wt% to 10 wt% based on the total weight of the first discoloration layer 500.

The first discoloration layer 500 further includes an electron-accepting material. The electron-accepting material may accept electrons generated from the first electrochromic material.

The electron-accepting material may include at least one selected from the group consisting of carbon black, carbon nanotubes and graphene.

The first discoloration layer 500 may include the electron-accepting material in the form of particles. The average particle diameter of the electron-accepting material may be about 1 nm to about 200 nm. The average particle diameter of the electron-accepting material may be about 5 nm to about 100 nm. The average particle diameter of the electron-accepting material may be about 10 nm to about 50 nm

The average particle diameters of the first electrochromic material and the electron-accepting material may be measured by dynamic light scattering. In addition, the average particle diameters of the first electrochromic material and the electron-accepting material may be D50 average particle diameters.

The nitrogen adsorption surface area of the electron-accepting material may be about 50 $m^2/g$ to about 200 $m^2/g$. The nitrogen adsorption surface area of the electron-accepting material may be about 70 $m^2/g$ to about 150 $m^2/g$. The nitrogen adsorption surface area may be a specific surface area calculated by a low-temperature nitrogen adsorption method (JIS K6217).

The tinting strength of the electron-accepting material may be about 100% to about 150% The tinting strength of the electron-accepting material may be measured according to JIS K6217.

The oil adsorption of the electron-accepting material may be about 50 $cm^3/100$ g to about 150$cm^3/100$ g. The oil adsorption of the electron-accepting material may be measured according to JIS K6221.

The acid value (pH value) of the electron-accepting material may be about 3.0 to about 4.0. The acid value of the electron-accepting material may be measured by a glass electrode pH meter after the electron-accepting material is mixed

with distilled water.

The first discoloration layer 500 may include the electron-accepting material in a content of about 0.5 wt% to 7 wt% based on the total weight of the first discoloration layer 500. The first discoloration layer 500 may include the electron-accepting material in a content of about 0.7 wt% to 5 wt% based on the total weight of the first discoloration layer 500. The first discoloration layer 500 may include the electron-accepting material in a content of about 0.8 wt% to 3 wt% based on the total weight of the first discoloration layer 500.

Since the first discoloration layer 500 includes the electron-accepting material in the average particle diameter range and weight range described above, the first laminate 12 and the electrochromic element according to an embodiment may have improved optical properties and electrochromic properties.

A weight ratio of the first electrochromic material to the electron-accepting material included in the first discoloration layer 500 may be about 20:1 to about 5:1. The weight ratio of the first electrochromic material to the electron-accepting material included in the first discoloration layer 500 may be about 15:1 to about 8:1. The weight ratio of the first electrochromic material to the electron-accepting material included in the first discoloration layer 500 may be about 13:1 to about 7:1.

In addition, the ratio of the average particle diameter of the first electrochromic material to the average particle diameter of the electron-accepting material may be about 0.7:1 to about 1.5:1. The ratio of the average particle diameter of the first electrochromic material to the average particle diameter of the electron-accepting material may be about 0.8:1 to about 1.4:1.

Since the first electrochromic material and the electron-accepting material have the weight ratio and average particle diameter ratio described above, the first laminate 12 and the electrochromic element according to an embodiment may have improved optical properties and electrochromic properties.

The electron-accepting material may have a smaller band gap than the first electrochromic material.

The band gap of the first electrochromic material may be about 2.0 eV to about 3.5 eV The band gap of the first electrochromic material may be about 2.2 eV to about 3.2 eV. The band gap of the first electrochromic material may be about 2.3 eV to about 3.0 eV.

The band gap of the electron-accepting material may be about 1.0 eV to about 3.0 eV. The band gap of the electron-accepting material may be about 1.5 eV to about 2.6 eV. The band gap of the electron-accepting material may be about 1.8 eV to about 2.4 eV.

The difference between the conduction band of the first electrochromic material and the conduction band of the electron-accepting material may be about 0.5 eV or less. The difference between the conduction band of the first electrochromic material and the conduction band of the electron-accepting material may be about 0.4 eV or less. The difference between the conduction band of the first electrochromic material and the conduction band of the electron-accepting material may be about 0.3 eV or less.

When the first discoloration layer 500 is irradiated with external light such as sunlight, the first electrochromic material may be excited, and the first electrochromic material may undergo photochromism. Here, since the electron-accepting material is arranged around the first electrochromic material, excited electrons of the first electrochromic material may be transferred to the electron-accepting material. Accordingly, the electron-accepting material may suppress the photochromism of the first electrochromic material.

Electrons transferred to the electron-accepting material may be transferred to the first transparent electrode 300, etc.

Since the first discoloration layer 500 includes the electron-accepting material in the above range, it may have improved long-term durability.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may be directly accessed to the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm. That is, a diameter of second electrochromic particles included in the second discoloration layer 600 may be about 2 nm to about 150 nm. The diameter of the second electrochromic particles may be about 5 nm to about 100 nm. The diameter of the second electrochromic particles may be about 10 nm to about 50 nm.

The second discoloration layer 600 may include the second electrochromic material in a content of about 70 wt% to about 98 wt% based on the total weight of the second discoloration layer 600. The second discoloration layer 600 may include the second electrochromic material in a content of about 80 wt% to about 96 wt% based on the total weight of the second discoloration layer 600. The second discoloration layer 600 may include the second electrochromic material in a content of about 85 wt% to about 94 wt% based on the total weight of the second discoloration layer 600.

In addition, the second discoloration layer 600 may further include the binder. The binder may be an inorganic binder. The binder may include a silica gel. The binder may be formed by a silica sol containing tetramethoxysilane or methyltrimethoxysilane.

The second discoloration layer 600 may include the binder in a content of about 1 wt% to 20 wt% based on the total weight of the second discoloration layer 600. The second discoloration layer 600 may include the binder in a content of about 2 wt% to 15 wt% based on the total weight of the second discoloration layer 600. The second discoloration layer 600 may include the binder in a content of about 3 wt% to 10 wt% based on the total weight of the first discoloration layer 500.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600.

The electrolyte layer 700 may include cations involved in an electrochromic reaction. The cations may include metal ions. The metal ions may be at least one selected from the group consisting of lithium ions ($Li^+$), sodium ions ($Na^+$) and potassium ions ($K^+$). The cations may be rubidium ions ($Rb^+$) or cesium ions ($Cs^+$).

The electrolyte layer 700 includes a solvent. The solvent may be at least one selected from the group consisting of acetamide, adiponitrile, sulfolane and polyethyleneglycol.

The electrolyte layer 700 may include a metal salt. The metal salt may be at least one selected from the group consisting of $LiClO_4$, $LiBF_4$, $LiAsF_6$, $LiPF_6$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$, $(CF_3SO_2)_2NLi$ and $NaClO_4$.

In addition, the electrolyte layer 700 may include a Cl or F element-containing compound as a metal salt. The electrolyte layer 700 may include one or more metal salts selected from among $LiClO_4$, $LiBF_4$, $LiAsF_6$, $LiPF_6$, LiCl, $LiB_{10}Cl_{10}$, $LiCF_3SO_3$, $LiCF_3CO_2$, $LiAsF_6$, $LiSbF_6$, $LiAlCl_4$, $CF_3SO_3Li$, $(CF_3SO_2)_2NLi$ and $NaClO_4$.

The electrolyte layer 700 may include a curable resin composition that can be cured by ultraviolet irradiation or heat. The curable resin composition may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocuring initiator and/or a thermal curing initiator.

In more detail, the electrolyte layer 700 may include a curable resin composition. The curable resin composition may have photo-curability and/or thermal curability.

The curable resin composition may include an acrylate copolymer.

The acrylate copolymer may be at least one selected from the group consisting of urethane acrylate and epoxy acrylate.

The molecular weight of the urethane acrylate may be about 3000 g/mol to about 50000 g/mol. The molecular weight of the urethane acrylate may be about 5000 g/mol to about 50000 g/mol.

The urethane acrylate may include an ether-based urethane acrylate.

The ether-based urethane acrylate may include a first polyol, a diisocyanate and an acrylate. The ether-based urethane acrylate may be formed by reacting with the polyether diol, the diisocyanate and the acrylate.

The ether-based urethane acrylate may include a first polyol having a molecular weight of about 100 g/mol to about 1000 g/mol; a first diisocyanate having a molecular weight of about 100 g/mol to about 1000 g/mol; and a first acrylate having a molecular weight of about 50 g/mol to about 500 g/mol.

The first polyol may have a molecular weight of about 100 g/mol to about 1000 g/mol. The first polyol may have a molecular weight of about 200 g/mol to about 1000 g/mol. The first polyol may have a molecular weight of about 200 g/mol to about 700 g/mol.

The first polyol may include polyether diol.

The first polyol may include poly(tetramethylene ether)diol.

The ether-based urethane acrylate may include the first polyol in a content of about 60 mol parts to about 100 mol parts based on 100 mol parts of the first diisocyanate. The ether-based urethane acrylate may include the first polyol in a content of about 65 mol parts to about 95 mol parts based on 100 mol parts of the first diisocyanate. The ether-based urethane acrylate may include the first polyol in a content of about 70 mol parts to about 90 mol parts based on 100 mol parts of the first diisocyanate.

The first diisocyanate may have a molecular weight of about 100 g/mol to about 1000 g/mol.

The first diisocyanate may be one or more selected from the group consisting of isophorone diisocyanate, toluene diisocyanate, hexamethylene diisocyanate and methylene diphenyl diisocyanate.

The first diisocyanate may be an isophorone diisocyanate.

The first diisocyanate may be included in a content of about 30 mol% to about 70 mol% in the ether-based urethane acrylate based on the total mole number of the ether-based urethane acrylate. The diisocyanate may be included in a content of about 40 mol% to about 60 mol% in the ether-based urethane acrylate based on the total mole number of the ether-based urethane acrylate.

The first acrylate may have a molecular weight of about 50 g/mol to about 500 g/mol.

The first acrylate may include a monoacrylate.

The first acrylate may be at least one selected from the group consisting of 2-hydroxyethyl acrylate and 2-hydroxypropyl acrylate methacrylate.

The ether-based urethane acrylate may include the first acrylate in a content of about 20 mol parts to about 40 mol parts based on 100 mol parts of the first diisocyanate. The ether-based urethane acrylate may include the first acrylate in a content of about 23 mol parts to about 37 mol parts based on 100 mol parts of the first diisocyanate. The ether-based urethane acrylate may include the first acrylate in a content of about 25 mol parts to about 35 mol parts based on 100 mol parts of the first diisocyanate.

The ether-based urethane acrylate may have a weight average molecular weight of about 1000 g/mol to about 100000 g/mol. The weight average molecular weight of the ether-based urethane acrylate may be about 2000 g/mol to about 70000 g/mol. The weight average molecular weight of the ether-based urethane acrylate may be about 5000 g/mol to about 50000 g/mol.

The ether-based urethane acrylate may include a second diisocyanate, a second polyol and a second acrylate.

The second diisocyanate may include an aliphatic diisocyanate.

The second diisocyanate may be at least one selected from the group consisting of hexamethylene diisocyanate, toluene diisocyanate, dicyclohexylmethane-4,4' -diisocyanate (H12MDI) and methylene diphenyl diisocyanate.

The second diisocyanate may be included in a content of about 20 mol% to about 60 mol% in the ether-based urethane acrylate based on 100 mol% of the ether-based urethane acrylate. The second diisocyanate may be included in a content of about 30 mol% to about 50 mol% in the ether-based urethane acrylate based on 100 mol% of the ether-based urethane acrylate.

The second polyol may include a polyester diol or a polycaprolactone diol.

A weight average molecular weight of the polycaprolactone diol may be about 100 g/mol to about 1000 g/mol. The weight average molecular weight of the polycaprolactone diol may be about 100 g/mol to about 800 g/mol. The weight average molecular weight of the polycaprolactone diol may be about 200 g/mol to about 800 g/mol.

The second acrylate may be at least one selected from the group consisting of 2-hydroxyethyl acrylate and 2-hydroxypropyl acrylate methacrylate.

A molecular weight of the ether-based urethane acrylate may be about 3000 g/mol to about 50000 g/mol. The molecular weight of the ether-based urethane acrylate may be about 5000 g/mol to about 50000 g/mol.

A viscosity of the urethane acrylate at about 25°C may be about 10000 cPs to about 100000 cPs. A viscosity of the urethane acrylate at about 60°C may be about 1000 cPs to about 8000 cPs.

The urethane acrylate is commercially available. The urethane acrylate may be at least one selected from the group consisting of, for example, Miramer PU210, Miramer PU256, Miramer PU2050, Miramer PU2100, Miramer PU2300C, Miramer PU2560, Miramer PU320, Miramer PU340, Miramer PU3000, Miramer PU3200, Miramer PU3450, Miramer PU5000, Miramer PU610, Miramer MU9500, Miramer MU9800, Miramer SC2154, Miramer SC2404 or Miramer SC2565 among MIWON Co.'s products.

The acrylate copolymer may include an epoxy acrylate.

The epoxy acrylate may be formed by reacting an epoxy compound and acrylate. A molar ratio of the epoxy compound to the acrylate may be about 1:1.5 to about 1:3.5.

The epoxy compound may be at least one selected from the group consisting of glycerol diglycidyl ether, a bisphenol A epoxy compound, a bisphenol F epoxy compound and a novolac epoxy compound.

The acrylate may be at least one selected from the group consisting of 2-carboxyethyl acrylate, 2-hydroxyethyl acrylate and acrylic acid.

The epoxy acrylate may have a weight average molecular weight of about 200 g/mol to about 3000 g/mol. The epoxy acrylate may have a weight average molecular weight of about 500 g/mol to about 2000 g/mol. The epoxy acrylate may have a weight average molecular weight of about 500 g/mol to about 2000 g/mol.

The epoxy acrylate may have a viscosity of about 100 cPs to about 5000 cPs at about 25°C. The epoxy acrylate may have a viscosity of about 100 cPs to about 5000 cPs at about 25°C. The epoxy acrylate may have a viscosity of about 10000 cPs to about 40000 cPs at about 25°C.

In addition, the epoxy acrylate may have a viscosity of at about 40°C, about 3000 cPs to about 8000 cPs.

In addition, the epoxy acrylate may have a viscosity of at about 60°C, about 200 cPs to about 6000 cPs.

The epoxy acrylate is commercially available. The epoxy acrylate may be at least one selected from the group consisting of, for example, Miramer PE210, Miramer PE250, Miramer SC6300, Miramer SC6400, Miramer PE110H, Miramer PE230, Miramer PE310, Miramer EA2235, Miramer EA2255, Miramer EA2259 or Miramer EA2280 among

MIWON Co.'s products.

The curable resin composition may further include a multifunctional acrylate monomer.

The multifunctional acrylate monomer may include a difunctional acrylate or a trifunctional acrylate.

The multifunctional acrylate monomer may include two or more functional groups. The multifunctional acrylate monomer may be a monomer including two or more functional acrylate groups. The multifunctional acrylate monomer may be an aliphatic compound including three acrylates.

The multifunctional acrylate monomer may be at least one selected from the group consisting of trimethylolpropane triacrylate, trimethylolpropane (ethylene oxide)$_3$ triacrylate (trimethylolpropane (EO)$_3$ triacrylate), trimethylolpropane (ethylene oxide)$_6$ triacrylate (trimethylolpropane (EO)$_6$ triacrylate), trimethylolpropane (ethylene oxide) triacrylate (trimethylolpropane (EO)$_9$ triacrylate), trimethylolpropane (ethylene oxide)$_{15}$ triacrylate (trimethylolpropane (EO)$_{15}$ triacrylate), glycerin (propylene oxide)$_3$ triacrylate (glycerine (PO)$_3$ triacrylate) and pantaerythritol triacrylate.

The multifunctional acrylate monomer may have a molecular weight of about 200 to about 800. The multifunctional acrylate monomer may have a molecular weight of about 200 to about 400.

The multifunctional acrylate monomer may have a viscosity of at about 25°C, about 20 cps to about 300 cps.

The multifunctional acrylate monomer may be included in a content of about 5 wt% to about 30 wt% in the curable resin composition based on the total weight of the curable resin composition. The multifunctional acrylate monomer may be included in a content of about 10 wt% to about 25 wt% in the curable resin composition based on the total weight of the curable resin composition. The multifunctional acrylate monomer may be included in a content of about 13 wt% to about 23 wt% in the curable resin composition based on the total weight of the curable resin composition.

The curable resin composition may include a monofunctional acrylate monomer. The monofunctional acrylate monomer may be a monomer including one functional acrylate group. The monofunctional acrylate monomer may be an aromatic compound including one functional acrylate group.

The monofunctional acrylate monomer may be at least one selected from the group consisting of caprolactone acrylate, cyclic trimethylolpropane formal acrylate, phenoxy benzyl acrylate, 3,3,5-trimethyl cyclohexyl acrylate, isobornyl acrylate, o-phenylphenol EO acrylate, 4-tert-butylcyclohexyl acrylate, benzyl acrylate, biphenylmethyl acrylate, lauryl acrylate, isodecyl acrylate, phenol(ethylene oxide) acrylate (phenol(EO) acrylate), phenol(ethylene oxide)$_{\text{second a}}$crylate (phenol(EO)$_{\text{second a}}$crylate), phenol(ethylene oxide)$_4$ acrylate (phenol(EO)4 acrylate) and tetra hydrofurfuryl acrylate.

In addition, the molecular weight of the monofunctional acrylate monomer may be about 150 to about 800. The molecular weight of the monofunctional acrylate monomer may be about 200 to about 400.

In addition, a viscosity of the monofunctional acrylate monomer at about 25°C may be about 10 cps to about 60 cps.

The monofunctional acrylate monomer may be included in a content of about 5 wt% to about 20 wt% in the curable composition based on the weight of the curable composition. The monofunctional acrylate monomer may be included in a content of about 5 wt% to about 10 wt% in the curable composition based on the weight of the curable composition. The monofunctional acrylate monomer may be included in a content of about 10 wt% to about 15 wt% in the curable composition based on the total weight of the curable composition.

The curable composition may include acrylate including a thermosetting functional group. That is, the acrylate including a thermosetting functional group may have thermal both curability and photo-curability.

The thermal curability acrylate may be at least one selected from the group consisting of urethane acrylate including a thermosetting functional group, epoxy acrylate including a thermosetting functional group, ester-based acrylate including a thermosetting functional group and ether-based acrylate including a thermosetting functional group.

The thermal curability acrylate may include a carboxyl group. The thermal curability acrylate may be at least one of compounds represented by Chemical Formulas 2 to 10 below:

[Chemical Formula 2]

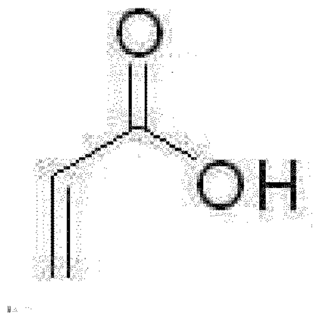

[Chemical Formula 3]

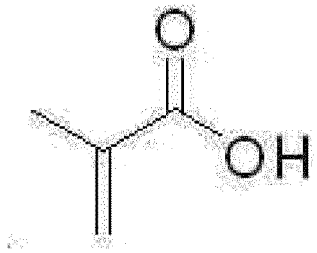

[Chemical Formula 4]

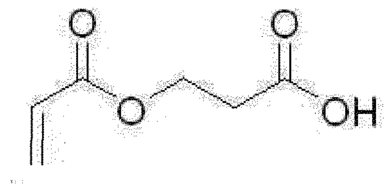

[Chemical Formula 5]

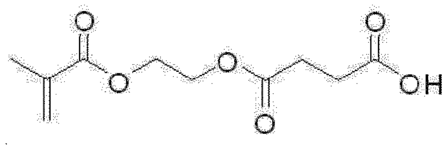

[Chemical Formula 6]

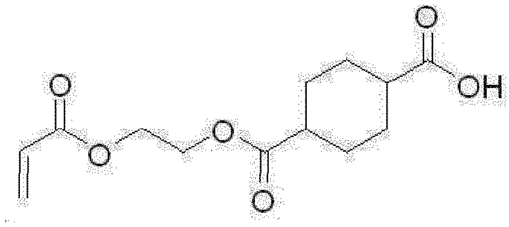

[Chemical Formula 7]

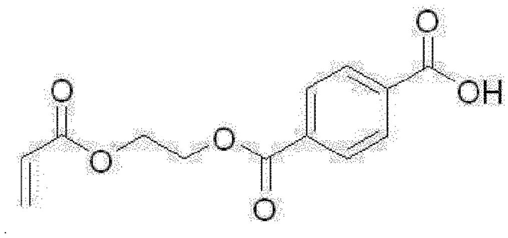

[Chemical Formula 8]

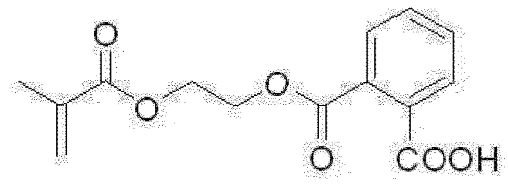

[Chemical Formula 9]

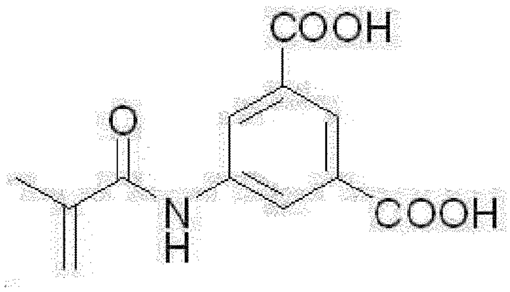

[Chemical Formula 10]

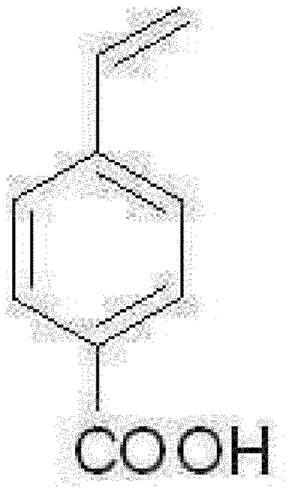

The thermal curability acrylate may be included in a content of about 1 wt% to about 10 wt% in the curable resin composition based on the total weight of the curable resin composition. The thermal curability acrylate may be included in a content of about 0.5 wt% to about 5 wt% in the curable resin composition based on the total weight of the curable resin composition. The thermal curability acrylate may be included in a content of about 2 wt% to about 8 wt% in the curable resin composition based on the total weight of the curable resin composition.

Since the curable resin composition includes the thermal curability acrylate, a coating layer of the electrolyte composition that is coated with an electrolyte composition including the curable resin composition may be easily cured or semi-cured.

Accordingly, the coating layer of the electrolyte composition may be effectively protected against external physical and chemical impacts.

The curable resin composition may further include a photocuable initiator.

The photoinitiator may be one or more selected from the group consisting of benzophenone-based photoinitiators, thioxanthone-based photoinitiators, α-hydroxy ketone-based photoinitiators, ketone-based photoinitiators, phenyl glyoxylate-based photoinitiators and acryl phosphine oxide-based photoinitiators.

The photoinitiator may be included in a content of about 0.1 wt% to about 5 wt% in the curable resin composition based on the total weight of the curable resin composition.

The photocuable resin composition may include a first photoinitiator and second photoinitiator that operate in different wavelength bands.

Specifically, the curable resin composition may include a first photoinitiator operating in a wavelength band of 208 nm to 295 nm; and a second photoinitiator operating in a wavelength band of 320 nm to 395 nm.

An operating wavelength band of the first photoinitiator may be 208 nm to 275 nm, or 208 nm to 245 nm, and an operating wavelength band of the second photoinitiator may be 330 nm to 390 nm, or 340 nm to 385 nm.

As a specific example, the first photoinitiator may generate radicals by UV light having a wavelength band of 208 nm to 295 nm and an amount of 100 $mJ/cm^2$ to 200 $mJ/cm^2$. In addition, the second photoinitiator may be decomposed and generate radicals by UV light having a wavelength band of 320 nm to 395 nm and an amount of 500 $mJ/cm^2$ to 1000 $mJ/cm^2$.

The first photoinitiator may be, for example, a ketone-based photoinitiator, and may have one or more aromatic groups or alicyclic groups. A specific example of the first photoinitiator includes hydroxycyclohexylphenyl ketone.

The second photoinitiator may be, for example, a phosphine-based photoinitiator, and may have one or more aromatic groups. A specific example of the second photoinitiator includes 2,4,6-trimethylbenzoyldiphenylphosphine.

Since the curable resin composition includes the first photoinitiator and the second photoinitiator, a coating layer of the electrolyte composition which is coated with an electrolyte composition including the curable resin composition may be easily cured or semi-cured. That is, ultraviolet rays of a specific wavelength may be used, and the coating layer of the electrolyte composition may can be easily cured or semi-cured.

Accordingly, the coating layer of the electrolyte composition may be effectively protected against external physical and chemical impacts.

The electrolyte layer 700 may further include an antioxidant.

The antioxidant may be at least one selected from the group consisting of phenol-based antioxidants, sulfur-based antioxidants, amine-based antioxidants, polyimide-based antioxidants and phosphorus-based antioxidants.

The antioxidant may be included in a content of 0.1 wt% to about 5 wt% in the electrolyte layer 700 based on the total weight of the electrolyte layer 700. The antioxidant may be included in a content of about 0.1 wt% to about 3 wt% in the electrolyte layer 700.

Since the electrolyte layer 700 includes the antioxidant, it may be easily protected from chemical shocks such as external oxygen. Accordingly, the electrolyte layer 700 may have a constant transmittance even if left for a long time.

The thickness of the electrolyte layer 700 may be about 10 $\mu$m to about 200 $\mu$m The thickness of the electrolyte layer 700 may be about 50 $\mu$m to about 150 $\mu$m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The electrochromic element according to the embodiment may be fabricated by the following method. FIGS. 8 to 11 are sectional views illustrating processes of fabricating the electrochromic element according to the embodiment.

Referring to FIG. 8, a first transparent electrode 300 is formed on a first substrate 100. The first transparent electrode 300 may be formed by a vacuum deposition process. A metal oxide such as indium tin oxide is deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that the layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. The first sol solution including a first electrochromic material, a binder and a solvent may be coated on the layer of the first transparent electrode 300. A first sol solution including a first electrochromic material, an electron-accepting material, a binder and a solvent may be coated on the layer of the first transparent electrode 300.

The first sol solution may include the first discoloration material in the form of particles in a content of about 5 wt% to about 30 wt%. The first sol solution may include the binder in a content of about 5 wt% to about 30 wt%. The first sol solution may include the solvent in a content of about 60 wt% to about 90 wt%.

Alternatively, a first sol solution including a first electrochromic material, an electron-accepting material, a binder and a solvent may be coated on the layer of the first transparent electrode 300. A first sol solution including a first electrochromic material, an electron-accepting material, a binder and a solvent may be coated on the layer of the first transparent electrode 300.

In addition, the first sol solution may include the electron-accepting material in a content of about 0.05 wt% to about 5 wt% based on the total solid weight. The first sol solution may include the electron-accepting material in a content of about 0.07 wt% to about 3 wt% based on the total solid weight. The electron-accepting material is as described above.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Referring to FIG. 9, a second transparent electrode 400 is formed on a second substrate 200.

The second transparent electrode 400 may be formed by a vacuum deposition process. A conductive metal oxide such as indium tin oxide may be deposited on the second substrate 200 by a sputtering process, etc., so that the second transparent electrode 400 may be formed.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the second transparent electrode 400. The second discoloration layer 600 may be formed by a sol-gel coating process. A second sol solution including a second electrochromic material, a binder and a solvent may be coated on the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt%. The second sol solution may include the binder in a content of about 5 wt% to about 30 wt%. The second sol solution may include the solvent in a content of about 60 wt% to about 90 wt%.

The second sol solution may additionally include a dispersant.

Referring to FIG. 10, an electrolyte composition for forming an electrolyte layer 700 is coated on the second discoloration layer 600. Accordingly, an electrolyte composition layer 701 is formed on the second discoloration layer 600.

As described above, the electrolyte composition may include the solvent, the metal salt and the curable resin composition. In addition, the electrolyte composition may further include an additional additive such as the antioxidant.

Next, a protective layer 900 is formed on the electrolyte composition layer 701. The protective layer 900 may be a polymer film including a release layer. The protective layer 900 may be a polyethylene terephthalate film including the release layer. The protective layer 900 may protect the electrolyte composition layer 701. In addition, since the protective layer 900 includes the release layer, the protective layer 900 may be easily removed when the electrolyte composition layer 701 is laminated on another layer.

Next, the electrolyte composition layer 701 may be cured or semi-cured.

The electrolyte composition layer 701 may be cured or semi-cured by heat. The electrolyte composition layer 701 may be cured or semi-cured for about 30°C to at about 60°C, about 1 minute to about 10 minutes.

The electrolyte composition layer 701 may be cured or semi-cured by light. The electrolyte composition layer 701 may be cured or semi-cured by UV light having a wavelength band of 320 nm to 395 nm and an amount of an amount of 500 $mJ/cm^2$ to 1000 $mJ/cm^2$.

Accordingly, a second laminate 13 including the second substrate 200, the second transparent electrode 400, the second discoloration layer 600 and the electrolyte composition layer 701 may be formed. The second laminate 13 may be a structure for manufacturing the electrochromic element according to an embodiment. In addition, the protective layer 900 may be disposed on the second laminate 13. The protective layer 900 may cover the upper surface of the electrolyte composition layer 701.

Prior to the lamination process described below, the first laminate 12 and/or the second laminate 13 may be left for about 60 days or more. For example, the first laminate 12 and/or the second laminate 13 may be transported for about 60 days or more. The first laminate 12 and/or the second laminate 13 may be transported for about 90 days or more. The first laminate 12 and/or the second laminate 13 may be transported for about 120 days or more.

The first laminate 12 and/or the second laminate 13 may be stored or transported for the above period in a rolled state. In addition, the first laminate 12 and/or the second laminate 13 may be stored or transported at room temperature in a humidity state of about 30% to about 60% for the above period.

Referring to FIG. 11, the first laminate 12 and the second laminate 13 are laminated. The first substrate 100, the first transparent electrode 300 and the first discoloration layer 500 are laminated on the electrolyte composition layer 701. Here, the first discoloration layer 500 is brought into direct contact with the electrolyte composition layer 701. In addition, in a state where the protective layer 900 is removed, the first discoloration layer 500 is laminated on the electrolyte composition layer 701.

The lamination process may be performed after the storage and/or transportation periods have elapsed, as described above.

Next, the electrolyte composition layer 701 is cured by light, and a first laminate 12 including the first substrate 100, the first transparent electrode 300 and the first discoloration layer 500 and a second laminate 13 including the second substrate 200, the second transparent electrode 400, the second discoloration layer 600 and the electrolyte layer 700 are laminated to each other. That is, the first laminate 12 and the second laminate 13 may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 70% to about 90%. The light transmittance of the electrochromic element may be about 75% to about 88%. The light transmittance of the electrochromic element may be about 78% to about 86%. The light transmittance of the electrochromic element may be about 65% to about 80%

The electrochromic element according to an embodiment may have a haze of less than about 5%. The haze of the electrochromic element according to an embodiment may be about 0.1% to about 5%. The haze of the electrochromic element according to an embodiment may be about 0.1% to about 4%. The haze of the electrochromic element according to an embodiment may be about 0.1% to about 3%.

In the first laminate 12, a decrease in transmittance after 90 days may be measured by Measurement Method 6

below:

[Measurement Method 6]

When the first laminate 12 is left at room temperature and a relative humidity of 60% for 90 days, a difference between an initial transmittance of the first laminate 12 and the transmittance of the laminate after 90 days is measured.
The transmittance of the first laminate 12 and the transmittance after 90 days thereof may be a total light transmittance.
The transmittance decrease may be less than about 10%. The transmittance decrease may be less than about 7%. The transmittance decrease may be less than about 5%. The transmittance decrease may be less than about 4%. The transmittance decrease may be less than about 3%. The transmittance decrease may be less than about 2%.
The initial transmittance may be about 80% to about 95%. The initial transmittance may be about 85% to about 95%.
The transmittance after 90 days may be about 76% to about 95%. The transmittance after 90 days may be about 81% to about 90%. The transmittance after 90 days may be about 84% to about 95%
In the first laminate 12, an increase in haze after 90 days may be measured by Measurement Method 7 below:

[Measurement Method 7]

When the first laminate 12 is left at room temperature and a relative humidity of 60% for about 90 days, an increase in the haze means a difference between the haze of the first laminate 12 after 90 days and an initial haze of the first laminate 12.
The haze increase may be less than about 10%. The haze increase may be less than about 7%. The haze increase may be less than about 5%. The haze increase may be less than about 4%. The haze increase may be less than about 3%. The haze increase may be less than about 2%.
The initial haze may be less than about 5%. The initial haze may be less than about 4%. The initial haze may be less than about 3%. The initial haze may be less than about 2%.
The haze after the 90 days may be less than about 6%. The haze after the 90 days may be less than about 5%. The haze after the 90 days may be less than about 4%. The haze after the 90 days may be less than about 3%.
In addition, in the first laminate 12, a deviation in transmittance after 90 days may be measured by Measurement Method 8 below:

[Measurement Method 8]

The first laminate 12 is left at room temperature and 60% relative humidity for about 90 days. Next, a transmittance is measured in each of the measurement regions of the first laminate 12, and the transmittance deviation is obtained by dividing a difference between a maximum transmittance of the measurement regions and a minimum transmittance thereof by an average transmittance.
Each of the measurement regions may be a square region of 5 cm × 5 cm. The transmittance deviation may be measured for each of the measurement regions in a region of about 100 cm × 100 cm. The transmittance may be measured at five points in each of the measurement regions.
The transmittance deviation may be less than about 0.2. The transmittance deviation may be less than about 0.15. The transmittance deviation may be less than about 0.10. The transmittance deviation may be less than about 0.05.
The transmittance deviation may be calculated according to Equation 5 below:

$$\text{Transmittance deviation} = (\text{Maximum transmittance} - \text{Minimum transmittance}) / \text{Average transmittance} \quad \text{[Equation 5]}$$

In the second laminate 13, a decrease in transmittance after 90 days may be measured by Measurement Method 9 below:

[Measurement Method 9]

When the second laminate 13 is left at room temperature and a relative humidity of 60% for 90 days in a state where the protective layer is disposed on the second laminate 13, a difference between an initial transmittance of the second laminate 13 and the transmittance of the laminate after 90 days is obtained.
The transmittance of the second laminate 13 and the transmittance thereof after 90 days may be a total light transmittance.

The transmittance decrease may be less than about 10%. The transmittance decrease may be less than about 7%. The transmittance decrease may be less than about 5%. The transmittance decrease may be less than about 4%. The transmittance decrease may be less than about 3%. The transmittance decrease may be less than about 2%.
The initial transmittance may be about 80% to about 95%. The initial transmittance may be about 85% to about 95%.
The transmittance after 90 days may be about 76% to about 95%. The transmittance after 90 days may be about 81% to about 90%. The transmittance after 90 days may be about 84% to about 95%.
In the second laminate 13, an increase in haze after 90 days may be measured by Measurement Method 10 below:

[Measurement Method 10]

When the second laminate 13 is left at room temperature and a relative humidity of 60% for about 90 days in a state where the protective layer is disposed on the second laminate 13, a haze increase means a difference between the haze of the second laminate 13 after 90 days and an initial haze of the second laminate 13.
The haze increase may be less than about 10%. The haze increase may be less than about 7%. The haze increase may be less than about 5%. The haze increase may be less than about 4%. The haze increase may be less than about 3%. The haze increase may be less than about 2%.
The initial haze may be less than about 5%. The initial haze may be less than about 4%. The initial haze may be less than about 3%. The initial haze may be less than about 2%.
The haze after the 90 days may be less than about 6%. The haze after the 90 days may be less than about 5%. The haze after the 90 days may be less than about 4%. The haze after the 90 days may be less than about 3%.
In addition, In the second laminate 13, a deviation in transmittance after 90 days may be measured by Measurement Method 11 below:

[Measurement Method 11]

In a state where the protective layer is disposed on the second laminate 13, the second laminate 13 is left at room temperature and 60% relative humidity for about 90 days. Next, a transmittance is measured in each of measurement regions of the second laminate 13, and the transmittance deviation is a value obtained by dividing a difference between a maximum transmittance of the measurement regions and a minimum transmittance thereof by an average transmittance.
The transmittance deviation of the second laminate 13 may be less than about 0.2. The transmittance deviation of the second laminate 13 may be less than about 0.15. The transmittance deviation of the second laminate 13 may be less than about 0.10. The transmittance deviation of the second laminate 13 may be less than about 0.05.
The electrochromic element according to an embodiment may have a driving range.
The driving range means a difference between a transmittance when discolored and a transmittance when colored.
A driving voltage may be applied to the electrochromic element according to an embodiment, and the electrochromic element according to an embodiment may be colored. Here, the transmittance of the electrochromic element according to an embodiment may be a transmittance when colored. For example, when one driving voltage of about 1 V to 5 V is applied to an electrochromic element according to an embodiment for one driving time of about 20 seconds to about 5 minutes, the electrochromic element according to an embodiment may be colored. For example, when a driving voltage of about 1.5 V is applied to an electrochromic element having a width of about 7.5 cm for about 30 seconds, the electrochromic element according to an embodiment may be colored.
Next, a driving voltage is applied in reverse to the electrochromic element according to an embodiment, and the electrochromic element according to an embodiment is discolored. Here, the transmittance of the electrochromic element according to an embodiment may be a transmittance when discolored. For example, when one driving voltage of about 1 V to 5 V is applied to an electrochromic element according to an embodiment in reverse for one driving time of about 20 seconds to about 5 minutes, the electrochromic element according to an embodiment may be discolored. For example, when a driving voltage of about 1.5 V is applied to an electrochromic element having a width of about 7.5 cm in reverse for about 30 seconds, the electrochromic element according to an embodiment may be discolored.
A decrease in a driving range of the electrochromic element according to an embodiment may be measured by Measurement Method 12 below:

[Measurement Method 12]

When the electrochromic element according to an embodiment is driven for about 10000 cycles, the driving range decrease means a difference between an initial driving range and the driving range after 10000 cycles. The 1 cycle is

composed of one driving for coloring and one driving for discoloring.

The driving range decrease may be less than about 20%. The driving range decrease may be less than about 15%. The driving range decrease may be less than about 10%. The driving range decrease may be less than about 7%.

Since the electrochromic element according to an embodiment has a driving range decrease in the above range, it may have improved durability and an appropriate operation time.

The electrochromic element according to an embodiment may have a driving range deviation measured by Measurement Method 13 below:

[Measurement Method 13]

The driving ranges in the measurement regions of the electrochromic element are measured, and the driving range deviation is obtained by dividing a difference between a maximum driving range in the measurement regions and a minimum driving range therein by an average driving range.

The driving range deviation may be less than 0.2. The driving range deviation may be less than 0.15. The driving range deviation may be less than 0.1. The driving range deviation may be less than 0.05.

Since the electrochromic element according to an embodiment has a driving range deviation in the above range, it may have improved appearance.

In the electrochromic element according to an embodiment, the first laminate 12 may have an appropriate decrease in transmittance after 90 days, as described above.

In addition, the first laminate 12 may have an appropriate haze increase after 90 days, as described above. In addition, the first laminate 12 may have an appropriate transmittance deviation.

In addition, the embodiment may have an appropriate driving range deviation, as described above.

Accordingly, since the first laminate 12 maintains its performance even when stored for a long time, the method of fabricating the electrochromic element according to an embodiment may provide an electrochromic element having improved optical properties.

In addition, since the first laminate 12 maintains its performance even when stored for a long time, the method of fabricating the electrochromic element according to an embodiment may provide an electrochromic element with improved performance even if the transportation period of the first laminate 12 and the second laminate 13 takes a long time after manufacturing the first laminate 12 and the second laminate 13.

Accordingly, the method of fabricating the electrochromic element according to an embodiment may provide an electrochromic element having improved performance even if the first laminate 12 and the second laminate 13 are manufactured separately at different times and/or spaces.

Accordingly, the method of fabricating the electrochromic element according to an embodiment may easily manufacture an electrochromic element having improved performance at a low cost.

In addition, since the first laminate 12 and the second laminate 13 according to an embodiment are transported in a semi-finished state, the first laminate 12 and the second laminate 13 may be easily wound and transported.

Accordingly, the method of fabricating the electrochromic element according to an embodiment may be an efficient and ease method.

FIG. 12 is a sectional view illustrating the cross-section of an electrochromic element according to still another embodiment. In the description of this embodiment, the description of the preceding embodiments may be referred to. That is, the description of the preceding embodiments may be essentially combined with the description of this embodiment, except for the parts that are changed.

Referring to FIG. 12, the electrochromic element according to an embodiment includes a first substrate 100, a second substrate 200, a first transparent electrode 300, a second transparent electrode 400, a first discoloration layer 500, a second discoloration layer 600 and an electrolyte layer 700.

Together with the second substrate 200, the first substrate 100 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the first substrate 100 and the second substrate 200.

The second substrate 200 faces the first substrate 100. The second substrate 200 is disposed on the first substrate 100. One end of the second substrate 200 may be disposed so as to be misaligned with one end of the first substrate 100. The other end of the second substrate 200 may be disposed so as to be misaligned with the other end of the first substrate 100.

Together with the first substrate 100, the second substrate 200 supports the first transparent electrode 300, the first discoloration layer 500, the second discoloration layer 600, the second transparent electrode 400 and the electrolyte layer 700.

In addition, the first transparent electrode 300, the first discoloration layer 500, the second discoloration layer 600, the second transparent electrode 400 and the electrolyte layer 700 are sandwiched between the second substrate 200 and the first substrate 100.

The first transparent electrode 300 is disposed on the first substrate 100. The first transparent electrode 300 may be deposited on the first substrate 100. In addition, a hard coating layer may be further included between the first transparent electrode 300 and the first substrate 100.

The second transparent electrode 400 is disposed under the second substrate 200. The second transparent electrode 400 may be deposited on the second substrate 200. In addition, a hard coating layer may further included between the second transparent electrode 400 and the second substrate 200.

The first discoloration layer 500 is disposed on the first transparent electrode 300. The first discoloration layer 500 may be directly disposed on the upper surface of the first transparent electrode 300. The first discoloration layer 500 may be electrically directly connected to the first transparent electrode 300.

The first discoloration layer 500 is electrically connected to the first transparent electrode 300. The first discoloration layer 500 may be directly accessed to the first transparent electrode 300. In addition, the first discoloration layer 500 is electrically connected to the electrolyte layer 700. The first discoloration layer 500 may be electrically connected to the electrolyte layer 700.

The first discoloration layer 500 may be discolored when supplied with electrons. The first discoloration layer 500 may include a first electrochromic material whose color is changed when supplied with electrons. The first electrochromic material may include at least one selected from the group consisting of tungsten oxide, niobium pentoxide, vanadium pentoxide, titanium oxide, molybdenum oxide, vilogen and poly(3,4-ethylenedioxythiophene (PEDOT).

The first discoloration layer 500 may include the first electrochromic material in the form of particles. The tungsten oxide, the niobium pentoxide, the vanadium pentoxide, the titanium oxide and the molybdenum oxide may be particles having an average particle diameter of about 1 nm to about 200 nm. The average particle diameter of the first electrochromic material may be about 5 nm to about 100 nm. The average particle diameter of the first electrochromic material may be about 10 nm to about 50 nm.

The first discoloration layer may include the first electrochromic material in a content of about 70 wt% to about 98 wt% based on the total weight of the first discoloration layer. The first discoloration layer may include the first electrochromic material in a content of about 80 wt% to about 96 wt% based on the total weight of the first discoloration layer. The first discoloration layer may include the first electrochromic material in a content of about 85 wt% to about 94 wt% based on the total weight of the first discoloration layer.

Since the first discoloration layer includes the first electrochromic material in the average particle diameter range and weight range described above, the first laminate and the electrochromic element according to an embodiment may have improved optical properties and electrochromic properties.

In addition, the first discoloration layer 500 may further include a binder. The binder may be an inorganic binder. The binder may include a silica gel. The binder may be formed by a silica sol containing tetramethoxysilane or methyltrimethoxysilane.

The first discoloration layer 500 may include the binder in a content of about 1 wt% to 20 wt% based on the total weight of the first discoloration layer 500. The first discoloration layer 500 may include the binder in a content of about 5 wt% to 15 wt% based on the total weight of the first discoloration layer 500. The first discoloration layer 500 may include the binder in a content of about 7 wt% to 13 wt% based on the total weight of the first discoloration layer 500.

The first discoloration layer 500 further includes an electron-accepting material. The electron-accepting material may accept electrons generated from the first electrochromic material.

The electron-accepting material may include at least one selected from the group consisting of carbon black, carbon nanotubes and graphene.

The first discoloration layer 500 may include the electron-accepting material in the form of particles. The average particle diameter of the electron-accepting material may be about 1 nm to about 200 nm. The average particle diameter of the electron-accepting material may be about 5 nm to about 100 nm. The average particle diameter of the electron-accepting material may be about 10 nm to about 50 nm.

The average particle diameters of the first electrochromic material and the electron-accepting material may be measured by dynamic light scattering. In addition, the average particle diameters of the first electrochromic material and the electron-accepting material may be D50 average particle diameters.

The nitrogen adsorption surface area of the electron-accepting material may be about 50 $m^2/g$ to about 200 $m^2/g$. The nitrogen adsorption surface area of the electron-accepting material may be about 70 $m^2/g$ to about 150 $m^2/g$. The nitrogen adsorption surface area may be a specific surface area calculated by a low-temperature nitrogen adsorption method (JIS K6217).

The tinting strength of the electron-accepting material may be about 100% to about 150%. The tinting strength of the electron-accepting material may be measured according to JIS K6217.

The oil adsorption of the electron-accepting material may be about 50 $cm^3/100$ g to about 150$cm^3/100$ g. The oil

adsorption of the electron-accepting material may be measured according to JIS K6221.

The acid value (pH value) of the electron-accepting material may be about 3.0 to about 4.0. The acid value of the electron-accepting material may be measured by a glass electrode pH meter after the electron-accepting material is mixed with distilled water.

The first discoloration layer 500 may include the electron-accepting material in a content of about 0.5 wt% to 7 wt% based on the total weight of the first discoloration layer 500. The first discoloration layer 500 may include the electron-accepting material in a content of about 0.7 wt% to 5 wt% based on the total weight of the first discoloration layer 500. The first discoloration layer 500 may include the electron-accepting material in a content of about 0.8 wt% to 3 wt% based on the total weight of the first discoloration layer 500.

Since the first discoloration layer 500 includes the electron-accepting material in the average particle diameter range and weight range described above, the first laminate 12 and the electrochromic element according to an embodiment may have improved optical properties and electrochromic properties.

The weight ratio of the first electrochromic material to the electron-accepting material included in the first discoloration layer 500 may be about 20:1 to about 5:1. The weight ratio of the first electrochromic material to the electron-accepting material included in the first discoloration layer 500 may be about 15:1 to about 8:1. The weight ratio of the first electrochromic material to the electron-accepting material included in the first discoloration layer 500 may be about 13:1 to about 7:1.

In addition, the ratio of the average particle diameter of the first electrochromic material to the average particle diameter of the electron-accepting material may be about 0.7:1 to about 1.5:1. The ratio of the average particle diameter of the first electrochromic material to the average particle diameter of the electron-accepting material may be about 0.8:1 to about 1.4:1.

Since the first electrochromic material and the electron-accepting material have the weight ratio and average particle diameter ratio described above the first laminate and the electrochromic element according to an embodiment may have improved optical properties and electrochromic properties.

The electron-accepting material may have a smaller band gap than the first electrochromic material.

The band gap of the first electrochromic material may be about 2.0 eV to about 3.5 eV. The band gap of the first electrochromic material may be about 2.2 eV to about 3.2 eV. The band gap of the first electrochromic material may be about 2.3 eV to about 3.0 eV.

The band gap of the electron-accepting material may be about 1.0 eV to about 3.0 eV. The band gap of the electron-accepting material may be about 1.5 eV to about 2.6 eV. The band gap of the electron-accepting material may be about 1.8 eV to about 2.4 eV.

The difference between the conduction band of the first electrochromic material and the conduction band of the electron-accepting material may be about 0.5 eV or less. The difference between the conduction band of the first electrochromic material and the conduction band of the electron-accepting material may be about 0.4 eV or less. The difference between the conduction band of the first electrochromic material and the conduction band of the electron-accepting material may be about 0.3 eV or less.

When the first discoloration layer 500 is irradiated with external light such as sunlight, the first electrochromic material may be excited, and the first electrochromic material may undergo photochromism. Here, since the electron-accepting material is arranged around the first electrochromic material, excited electrons of the first electrochromic material may be transferred to the electron-accepting material. Accordingly, the electron-accepting material may suppress the photochromism of the first electrochromic material.

Electrons transferred to the electron-accepting material may be transferred to the first transparent electrode 300, etc.

The first substrate 100, the first transparent electrode 300 and the first discoloration layer 500 may be included in a first laminate 12. That is, the first laminate 12 includes the first substrate 100, the first transparent electrode 300 and the first discoloration layer 500. The first laminate 12 may be composed of the first substrate 100, the first transparent electrode 300 and the first discoloration layer 500.

The second discoloration layer 600 is disposed under the second transparent electrode 400. The second discoloration layer 600 may be directly disposed on the lower surface of the second transparent electrode 400. The second discoloration layer 600 may be electrically directly connected to the second transparent electrode 400.

The second discoloration layer 600 is electrically connected to the second transparent electrode 400. The second discoloration layer 600 may be directly accessed to the second transparent electrode 400. In addition, the second discoloration layer 600 is electrically connected to the electrolyte layer 700. The second discoloration layer 600 may be electrically connected to the electrolyte layer 700.

The second discoloration layer 600 may be discolored while losing electrons. The second discoloration layer 600 may include a second electrochromic material that is oxidized and discolored while losing electrons. The second discoloration layer 600 may include at least one selected from the group consisting of Prussian blue, nickel oxide and iridium oxide.

The second discoloration layer 600 may include the second electrochromic material in the form of particles. The Prussian blue, the nickel oxide and the iridium oxide may be particles having a particle diameter of about 1nm to about 200 nm.

In addition, the second discoloration layer 600 may further include the binder.

The second substrate, the second transparent electrode and the second discoloration layer are included in a second laminate. That is, the second laminate includes the second substrate, the second transparent electrode and the second discoloration layer. The second laminate may be composed of the second substrate, the second transparent electrode and the second discoloration layer.

The electrolyte layer 700 is disposed on the first discoloration layer 500. In addition, the electrolyte layer 700 is disposed under the second discoloration layer 600. The electrolyte layer 700 is disposed between the first discoloration layer 500 and the second discoloration layer 600. The electrolyte layer is disposed between the first laminate and the second laminate. The electrolyte layer may be laminated to the first laminate and the second laminate.

The electrolyte layer 700 may include a solid polymer electrolyte containing metal ions, an inorganic hydrate, etc. The electrolyte layer 700 may include lithium ions (Li+), sodium ions (Na+), potassium ions (K+), and the like.

Specifically, poly-AMPS, PEO/$LiCF_3SO_3$, etc. may be used as the solid polymer electrolyte, and $Sb_2O_5 \cdot 4H_2O$, etc. may be used as the inorganic hydrate.

In addition, the electrolyte layer 700 is a configuration that provides electrolyte ions involved in an electrochromic reaction. The electrolyte ions may be, for example, monovalent cations such as $H^+$, $Li^+$, $Na^+$, $K^+$, $Rb^+$ or $Cs^+$.

The electrolyte layer 700 may include an electrolyte. For example, a liquid electrolyte, a gel polymer electrolyte, an inorganic solid electrolyte, etc. may be used as the electrolyte without limitation. In addition, the electrolyte may be used in the form of a single layer or film so as to be laminated together with the electrode or the substrate.

The type of electrolyte salt used in the electrolyte layer 700 is not particularly limited so long as it contains a compound capable of providing monovalent cations, i.e., $H^+$, $Li^+$, $Na^+$, $K^+$, $Rb^+$ or $Cs^+$. For example, the electrolyte layer 700 may include a lithium salt compound such as $LiClO_4$, $LiBF_4$, $LiAsF_6$, $LiPF_6$, LiCl, LiBr, LiI, $LiB_{10}Cl_{10}$, $LiCF_3SO_3$, $LiCF_3CO_2$, $LiAsF_6$, $LiSbF_6$, $LiAlCl_4$, $CH_3SO_3Li$, $CF_3SO_3Li$ or $(CF_3SO_2)_2NLi$; or a sodium salt compound such as $NaClO_4$.

As one example, the electrolyte layer 700 may include a Cl or F element-containing compound as an electrolyte salt. Specifically, the electrolyte layer 700 may include one or more electrolyte salts selected from among $LiClO_4$, $LiBF_4$, $LiAsF_6$, $LiPF_6$, LiCl, $LiB_{10}Cl_{10}$, $LiCF_3SO_3$, $LiCF_3CO_2$, $LiAsF_6$, $LiSbF_6$, $LiAlCl_4$, $CF_3SO_3Li$, $(CF_3SO_2)_2NLi$ and $NaClO_4$.

The electrolyte may additionally include a carbonate compound as a solvent. Since a carbonate compound has a high dielectric constant, it may increase ionic conductivity. As a non-limiting example, a solvent such as propylene carbonate (PC), ethylene carbonate (EC), dimethyl carbonate (DMC), diethyl carbonate (DEC) or ethylmethyl carbonate (EMC) may be used as a carbonate compound.

As another example, when the electrolyte layer 700 includes a gel polymer electrolyte, the electrolyte layer 700 may include a polymer such as poly-vinyl sulfonic acid, poly-styrene sulfonic acid, polyethylene sulfonic acid, poly-2-acrylamido-2methyl-propane sulfonic acid, poly-perfluoro sulfonic acid, poly-toluene sulfonic acid, poly-vinyl alcohol, poly-ethylene imine, poly-vinyl pyrrolidone, poly-ethylene oxide (PEO), poly-propylene oxide (PPO), poly-(ethylene oxide (siloxane PEOS), poly-(ethylene glycol, siloxane), poly-(propylene oxide, siloxane), poly-(ethylene oxide, methyl methacrylate) (PEO-PMMA), poly-(ethylene oxide, acrylic acid) (PEO PAA), poly-(propylene glycol, methyl methacrylate) (PPG PMMA), poly-ethylene succinate or poly-ethylene adipate. In one example, a mixture of two or more of the listed polymers or two or more copolymers may be used as a polymer electrolyte.

In addition, the electrolyte layer 700 may include a curable resin that can be cured by ultraviolet irradiation or heat. The curable resin may be at least one selected from the group consisting of an acrylate-based oligomer, a polyethylene glycol-based oligomer, a urethane-based oligomer, a polyester-based oligomer, polyethylene glycol dimethyl and polyethylene glycol diacrylate. In addition, the electrolyte layer 700 may include a photocurable initiator and/or a heat-curable initiator.

A thickness of the electrolyte layer 700 may be about 10 $\mu$m to about 200 $\mu$m. The thickness of the electrolyte layer 700 may be about 50 $\mu$m to about 150 $\mu$m.

The electrolyte layer 700 may have a transmittance in a range of 60% to 95 %. Specifically, the electrolyte layer 700 may have a transmittance of 60% to 95 % for visible light in a wavelength range of 380 nm to 780 nm, more specifically in a wavelength of 400 nm or a wavelength of 550 nm. The transmittance may be measured using a known haze meter (HM).

The electrochromic element according to the embodiment may be fabricated by the following method. FIGS. 13 to 16 are sectional views illustrating processes of fabricating the electrochromic element according to an embodiment.

Referring to FIG. 13, a first transparent electrode 300 is formed on a first substrate 100. The first transparent electrode 300 may be formed by a vacuum deposition process. A metal oxide such as indium tin oxide is deposited on the first substrate 100 by a sputtering process, etc., thereby forming the first transparent electrode 300.

The first transparent electrode 300 may be formed by a coating process. Metal nanowires are coated together with a binder on the first substrate 100, thereby forming the first transparent electrode 300. The first substrate 100 may be

coated with a conductive polymer, thereby forming the first transparent electrode 300.

In addition, the first transparent electrode 300 may be formed by a patterning process. A metal layer may be formed on the first substrate 100 by a sputtering process, etc., and the metal layer may be patterned, so that the layer of the first transparent electrode 300 including a metal mesh may be formed on the first substrate 100.

Next, a first discoloration layer 500 is formed on the layer of the first transparent electrode 300. The first discoloration layer 500 may be formed by a sol-gel coating process. A first sol solution including a first electrochromic material, an electron-accepting material, a binder and a solvent may be coated on the layer of the first transparent electrode 300. A first sol solution including a first electrochromic material, an electron-accepting material, a binder and a solvent may be coated on the layer of the first transparent electrode 300.

The first sol solution may include the first discoloration material in the form of particles in a content of about 5 wt% to about 30 wt% based on the total weight of the first sol solution. The first sol solution may include the binder in a content of about 0.5 wt% to about 5 wt% based on the total weight of the first sol solution. The first sol solution may include the solvent in a content of about 70 wt% to about 95 wt% based on the total weight of the first sol solution.

In addition, the first sol solution may include the electron-accepting material in a content of about 0.05 wt% to about 5 wt% based on the total solid weight. The first sol solution may include the electron-accepting material in a content of about 0.07 wt% to about 3 wt% based on the total solid weight. The electron-accepting material is as described above.

The first sol solution may additionally include a dispersant.

The solvent may be at least one selected from the group consisting of alcohols, ethers, ketones, esters and aromatic hydrocarbons. The solvent may be at least one selected from the group consisting of ethanol, propanol, butanol, hexanol, cyclohexanol, diacetone alcohol, ethylene glycol, diethylene glycol, glycerin, diethyl ether, ethylene glycol monomethyl ether, ethylene glycol monoethyl ether, ethylene glycol monobutyl ether, diethylene glycol monomethyl ether, diethylene glycol monoethyl ether, propylene glycol monomethyl ether, acetone, methyl ethyl ketone, acetylacetone, methyl isobutyl ketone, cyclohexanone, acetoacetic acid ester, methyl acetate, ethyl acetate, n-propyl acetate, i-butyl acetate, and the like.

As described above, the binder may be an inorganic binder.

Accordingly, a first laminate including the first substrate, the first transparent electrode and the first discoloration layer may be formed.

Referring to FIG. 14, a second transparent electrode 400 is formed on a second substrate 200.

The second transparent electrode 400 may be formed by a vacuum deposition process. A metal oxide such as indium tin oxide may be deposited on the second substrate 200 by a sputtering process, etc., thereby forming the second transparent electrode 400.

The second transparent electrode 400 may be formed by a coating process. Metal nanowires may be coated together with a binder on the second substrate 200, thereby forming the second transparent electrode 400. A conductive polymer may be coated on the second substrate 200, thereby forming the second transparent electrode 400.

In addition, the second transparent electrode 400 may be formed by a patterning process. A metal layer may be formed on the second substrate 200 by a sputtering process, etc., and the metal layer may be patterned, so that a layer of the second transparent electrode 400 including a metal mesh may be formed on the second substrate 200.

Next, a second discoloration layer 600 is formed on the layer of the second transparent electrode 400. The second discoloration layer 600 may be formed by a sol-gel coating process. A second sol solution including a second electrochromic material, a binder and a solvent may be coated on the layer of the second transparent electrode 400. A sol-gel reaction may occur in the coated second sol solution, and the second discoloration layer 600 may be formed.

The second sol solution may include the second discoloration material in the form of particles in a content of about 5 wt% to about 30 wt% based on the total weight of the second sol solution. The second sol solution may include the binder in a content of about 0.5 wt% to about 5 wt% based on the total weight of the second sol solution. The second sol solution may include the solvent in a content of about 70 wt% to about 95 wt% based on the total weight of the second sol solution.

The second sol solution may additionally include a dispersant.

Accordingly, a second laminate including the second substrate, the second transparent electrode and the second discoloration layer is formed.

Referring to FIG. 15, an electrolyte composition for forming an electrolyte layer 700 is formed on the first discoloration layer 500.

The electrolyte composition may include a metal salt, an electrolyte, a photocuable resin and a photocuable initiator. The photocuable resin may be at least one selected from the group consisting of hexandiol diacrylate (HDDA), tripropylene glycoldiacrylate, ethylene glycoldiacrylate (EGDA), trimethylolpropane triacrylate (TMPTA), trimethylolpropane ethoxylated triacrylate (TMPEOTA), glycerol propoxylated triacrylate (GPTA), pentaerythritol tetraacrylate (PETA), and dipentaerythritol hexaacrylate (DPHA).

The metal salt, the electrolyte and the photocuable initiator may be the same as described above.

Referring to FIG. 16, the second substrate 200, the second transparent electrode 400 and the second discoloration layer 600 are laminated on the coated electrolyte composition. Here, the second discoloration layer 600

is brought into direct contact with the coated electrolyte composition. That is, the electrolyte composition is coated on the first laminate, and the second laminate is disposed on the coated electrolyte composition.

Next, the coated electrolyte composition is cured by light, and a first laminate including the first substrate 100, the first transparent electrode 300 and the first discoloration layer 500 and a second laminate including the second substrate 200, the second transparent electrode 400 and the second discoloration layer 600 are laminated to each other. That is, the first laminate and the second laminate may be adhered to each other by the electrolyte layer 700.

In addition, the electrochromic element according to an embodiment may have light transmittance. Here, the light transmittance may mean light transmittance based on the state in which the electrochromic element does not undergo photochromism. In addition, the light transmittance may mean a total light transmittance.

The light transmittance of the electrochromic element may be about 70% to about 90%. The light transmittance of the electrochromic element may be about 75% to about 88%. The light transmittance of the electrochromic element may be about 78% to about 86%

The first laminate may have a change in light transmittance. The change in light transmittance is a change in light transmittance after exposure to similar sunlight relative to an initial light transmittance.

The change in light transmittance may be measured by Measurement Method 14 below:

[Measurement Method 14]

The first discoloration layer is irradiated with similar sunlight at an intensity of about 1000 $W/m^2$ for 10 minutes, a first light transmittance of the electrochromic element before irradiation with the similar sunlight is measured, a second light transmittance of the electrochromic element after irradiation with the similar sunlight is measured, and a change in light transmittance is obtained by dividing a difference between the first light transmittance and the second light transmittance by the first light transmittance.

The change in light transmittance (△TR) may be represented by Equation 6 below:

[Equation 6]

$$\triangle TR = (T1 - T2) / T1$$

where T1 denotes the initial light transmittance of the electrochromic element, and T2 denotes the light transmittance of the electrochromic element after irradiating the first discoloration layer with the similar sunlight at an intensity of about 1000 $W/m^2$ for 10 minutes through the first substrate.

The similar sunlight may be artificial light with a spectrum similar to that of sunlight. The similar sunlight may be implemented by a solar simulator.

The change in light transmittance of the first laminate may be 0 to about 0.30 The change in light transmittance of the first laminate may be 0 to about 0.25. The change in light transmittance of the first laminate may be about 0.01 to about 0.20. The change in light transmittance of the first laminate may be about 0.02 to about 0.18. The change in light transmittance of the first laminate may be about 0.03 to about 0.15

The light transmittance of the first laminate may be about 75% to about 95%. The light transmittance of the first laminate may be about 80% to about 95%. The light transmittance of the first laminate may be about 85% to about 93%.

The light transmittance of the first laminate after irradiation with the similar sunlight may be about 60% to about 85%. The light transmittance of the first laminate after irradiation with the similar sunlight may be about 65% to about 83% The light transmittance of the first laminate after irradiation with the similar sunlight may be about 70% to about 80%.

The first laminate has the change in light transmittance described above. Accordingly, the electrochromic element according to an embodiment may reduce a change in transmittance caused by external sunlight, etc.

That is, since the electrochromic element according to an embodiment may reduce a transmittance deviation due to external sunlight, it may easily control a target transmittance at the on-off time.

The first laminate may have a haze.

The haze may mean the haze of the first laminate that does not undergo photochromism or electrochromism.

The haze of the first laminate may be about 5% or less. The haze of the first laminate may be about 4% or less. The haze of the first laminate may be about 3% or less. The haze of the first laminate may be about 2% or less.

The first laminate may have a change in its haze.

The haze change may be measured by Measurement Method 15 below:

[Measurement Method 15]

A first haze of the first laminate before irradiation with the similar sunlight is measured, a second haze of the first laminate after irradiation with the similar sunlight is measured, and the haze change is a value obtained by subtracting the first haze from the second haze.
The haze change in the first laminate may be 5.5% or less. The haze change in the first laminate may be 5% or less. The haze change in the first laminate may be 4% or less. The haze change in the first laminate may be 3% or less. The haze change in the first laminate may be 2% or less.
In the first laminate, the haze after irradiation with the similar sunlight may be about 6% or less. In the first laminate, the haze after irradiation with the similar sunlight may be about 5% or less. In the first laminate, the haze after irradiation with the similar sunlight may be about 4% or less. In the first laminate, the haze after irradiation with the similar sunlight may be about 3% or less.
The light transmittance may be a total light transmittance. The total light transmittance may be a light transmittance in a wavelength range of about 380 nm to about 780 nm.
The light transmittance and the haze may be measured according to ASTM D1003.
The first discoloration layer may have L*, a* and b*.
The L* of the first discoloration layer may be about 70 to about 100. The L* of the first discoloration layer may be about 80 to about 100. The L* of the first discoloration layer may be about 91 to about 100. The L* of the first discoloration layer may be measured in a non-photochromic or non-electrochromic state.
The first discoloration layer may have a change in L*.
The change in L* may be measured by Measurement Method 16 below:

[Measurement Method 16]

The first L* of the first discoloration layer before irradiation with the similar sunlight is measured, the second L* of the first discoloration layer after irradiation with the similar sunlight is measured, and the change in L* is an absolute value of a difference between the second L* and the first L*.
The change in L* may be represented by Equation 7 below:

[Equation 7]

$$\text{Change in } L^* = \left| \text{second } L^* - \text{first } L^* \right|$$

A change in L* of the first discoloration layer may be 7 or less. The change in L* of the electrochromic element may be 6 or less. The change in L* of the first discoloration layer may be 5 or less. The change in L* of the first discoloration layer may be 4 or less.
The L* of the first discoloration layer after irradiation with the similar sunlight may be about 70 to about 95. The L* of the first discoloration layer after irradiation with the similar sunlight may be about 76 to about 94
The a* of the first discoloration layer may be -3 to 2. The a* of the first discoloration layer may be -2.5 to 1.5. The a* of the first discoloration layer may be -2 to 1. The a* of the first discoloration layer may be measured in a non-photochromic or non-electrochromic state.
The first discoloration layer may have a change in its a*.
The change in a* may be measured by Measurement Method 17 below:

[Measurement Method 17]

The first a* of the first discoloration layer before irradiation with the similar sunlight is measured, the second a* of the first discoloration layer after irradiation with the similar sunlight is measured, and the change in a* is a value obtained by subtracting the first a* from the second a*.
The change in a* of the first discoloration layer may be represented by Equation 8 below:

[Equation 8]

$$\text{Change in a*} = \left| \text{second a*} - \text{first a*} \right|$$

The change in a* of the first discoloration layer may be 6 or less. The change in a* of the first discoloration layer may be 5 or less. The change in a* of the first discoloration layer may be 2 or less. The change in a* of the first discoloration layer may be 3 or less. The change in a* of the first discoloration layer may be 1.8 or less. The change in a* of the first discoloration layer may be 1.6 or less. The change in a* of the first discoloration layer may be 1.5 or less.

The a* of the first discoloration layer after irradiation with the similar sunlight may be about -5 to about 0. The a* of the first discoloration layer after irradiation with the similar sunlight may be about -4.5 to about 0.

The b* of the first discoloration layer may be 0 to 4. The b* of the first discoloration layer may be 0.1 to 3.5. The b* of the first discoloration layer may be 0.5 to 3. The b* of the first discoloration layer may be measured in a non-photochromic or non-electrochromic state.

The first discoloration layer may have a change in its b*.

The change in b* may be measured by Measurement Method 18 below:

[Measurement Method 18]

The first b* of the first discoloration layer before irradiation with the similar sunlight is measured, the second b* of the first discoloration layer after irradiation with the similar sunlight is measured, and the change in b* is a value obtained by subtracting the first b* from the second b*.

The change in b* may be calculated according to Equation 9 below:

[Equation 9]

$$\text{Change in b*} = \left| \text{second b*} - \text{first b*} \right|$$

The change in b* of the first discoloration layer may be 10 or less. The change in b* of the first discoloration layer may be 8 or less. The change in b* of the first discoloration layer may be 7 or less. The change in b* of the first discoloration layer may be 2.8 or less. The change in b* of the first discoloration layer may be 2.6 or less. The change in b* of the first discoloration layer may be 2.5 or less.

The b* of the first discoloration layer after irradiation with the similar sunlight may be about -5 to about 3. The b* of the first discoloration layer after irradiation with the similar sunlight may be about -4.5 to about 2.

The L*, the a* and the b* may be measured using a colorimeter.

The first laminate may have the haze changes described above. In addition, the first discoloration layer may have the change in L*, the change in a* and the change in b*.

Accordingly, the electrochromic element according to an embodiment may reduce changes in appearance due to external sunlight. Accordingly, the electrochromic element according to an embodiment may have a consistent appearance even when the external environment changes.

In addition, since the electrochromic element according to an embodiment includes the electron-accepting material, it may have a buffering effect against external light and driving voltage. Accordingly, the electrochromic element according to an embodiment may have improved durability.

FIG. 17 illustrates a window device first according to an embodiment.

Referring to FIG. 17, the window device first according to an embodiment includes the electrochromic element 10, a frame 20, windows 31, 32 and 33, a plug-in component 40 and a power supply 50.

The frame 20 may be composed of one or more pieces. For example, the frame 20 may be composed of one or more materials, e.g., vinyl, PVC, aluminum (Al), steel, or fiberglass. The frame 20 fixes the windows 31, 32 and 33 and seals the spaces between the windows 31, 32 and 33.

In addition, the frame 20 may hold or include foam or pieces made of other materials. The frame 20 includes a spacer, and the spacer may be disposed between adjacent windows 31, 32 and 33. In addition, the spacer may tightly seal the spaces between the windows 31, 32 and 33, together with an adhesive sealant.

The windows 31, 32 and 33 are fixed to the frame 20. The windows 31, 32 and 33 may be glass pane. The windows 31, 32 and 33 may be general silicon oxide (SOx)-based glass substrates such as soda lime glass or float glass composed of about 75% silica ($SiO_2$) plus $Na_2O$, CaO, and some minor additives. However, any material having

appropriate optical, electrical, thermal, and mechanical properties may be used. The windows 31, 32 and 33 may also include, for example, other glass materials, plastics and thermoplastic resins (e.g., poly(methyl methacrylate), polystyrene, a polycarbonate, allyl diglycol carbonate, SAN (styrene acrylonitrile copolymer), poly(4-methyl-1-pentene), polyester, polyamide), or mirror materials. The windows 31, 32 and 33 may include tempered glass.

The windows 31, 32 and 33 may include a first window 31, a second window 32 and a third window 33. The first window 3first and the third window 33 may be disposed at the outermost side, and the second window 32 may be disposed between the first window 3first and the third window 33.

The electrochromic element 10 is disposed between the first window 3first and the second window 32. The electrochromic element 10 may be laminated to the first window 3first and the second window 32.

The electrochromic element 10 may be laminated to the first window 3first by a first polyvinyl butyral sheet. That is, the first polyvinyl butyral sheet may be disposed on the first window 3first and the electrochromic element 10, and may be laminated to the first window 3first and the electrochromic element 10.

The electrochromic element 10 may be laminated to the second window 32 by a second polyvinyl butyral sheet. That is, the second polyvinyl butyral sheet may be disposed on the second window 32 and the electrochromic element 10 and may be laminated to the second window 32 and the electrochromic element 10.

A space 60 may be formed between the second window 32 and the third window 33. The space may be filled with one or more gases, such as argon (Ar), krypton (Kr), or xenon (Xn).

The windows 31, 32 and 33 may have glass pane sizes for residential or commercial window applications. The size of glass pane may vary widely depending on the specific needs of the home or commercial enterprise. In some embodiments, the windows 31, 32 and 33 may be formed of architectural glass. Architectural glass is typically used in commercial buildings, but can also be used in residential buildings. Normally, but not necessarily, the indoor environment is separated from the outdoor environment. In some embodiments, a suitable architectural glass substrate is at least about 20 inches by about 20 inches, and may be much larger, for example, about 80 inches by about 120 inches, or larger. Architectural glass is typically at least about 2 millimeters (mm) thick and may be as thick as 6 mm or more.

In embodiments, the windows 31, 32 and 33 have a thickness in a range of about 1 mm to about 10 mm.

In embodiments, the windows 31, 32 and 33 may be, for example, very thin and flexible Gorilla Glass® or WillowTM Glass which is commercially available from of Corning, Inc. in New York. The thicknesses of these glasses may be less than 0.3 mm or less than about 1 mm.

The plug-in component 40 may include a first electrical input 41, a second electrical input 42, a third electrical input 43, a fourth electrical input 44 and a fifth electrical input 45.

In addition, the power supply 50 includes a first power terminal 51 and a second power terminal 52.

The first electrical input 41 is electrically connected to the first power terminal 51 through one or more wires or other electrical connections, components, or devices.

The first electrical input 41 may include a pin, a socket, or another electrical connector or conductor. In addition, the first electrical input 41 may be electrically connected to the electrochromic element 10 through a first bus bar (not shown). The first bus bar may be electrically connected to the second transparent electrode 400.

The second electrical input 42 is electrically connected to the second power terminal 52 through one or more wires or other electrical connections, components, or devices.

The second electrical input 42 may include a pin, a socket, or another electrical connector or conductor. In addition, the second electrical input 42 may be electrically connected to the electrochromic element 10 through a second bus bar (not shown). The second bus bar may be electrically connected to the first transparent electrode 300.

The third electrical input 43 may be coupled to a device, system, or building ground.

The fourth electrical input 44 and the fifth electrical input 45 may be individually used, for example, for communication between a controller or microcontroller for controlling the window device first and a network controller.

The power supply 50 supplies power to the electrochromic element 10 through the plug-in component 40. In addition, the power supply 50 may be controlled by the controller outside to supply power of a certain waveform to the electrochromic element 10.

In addition, the features, structures, effects, and the like described in the embodiments are included in at least one embodiment of the present invention, and are not necessarily limited to only one embodiment. Furthermore, the features, structures, effects and the like illustrated in the embodiments can be combined and modified by those skilled in the art to which the embodiments belong. Therefore, it should be understood that the combined and modified embodiments are included in the present invention.

Although the above description focuses on embodiments, these are only examples and do not limit the present invention, and those with ordinary knowledge in the field to which the present invention pertains will be able to recognize that various modifications and applications not exemplified above are possible without departing from the essential characteristics of the present invention. For example, each component specifically shown in the embodiments can be modified and implemented, and the differences related to such modifications and applications should be interpreted as being included in the scope of the present invention defined in the appended claims.

Fabrication examples

ITO film: Hansung Industrial Co., Ltd.,, HI150-ABE-125A-AB
Tungsten oxide powder #1: Adcro Co., Ltd., ELACO-W
Tungsten oxide powder #2: Skyspring Nanomaterials Inc, 8010CN
Tungsten oxide powder #3: Jiangxi LF cemented carbide tools CO LTD, blue tungsten oxide (BTO)
Nickel oxide powder: Adcro Co., Ltd., ELACO-P
Carbon black: Mitsubishi Chemical Corp, MA-100
Carbon nanotube: Avention, AV-481436
Gel polymer electrolyte composition #1
About 39 parts by weight of dipentaerythritol hexaacrylate (DPHA), about 80 parts by weight of an ionic liquid, 1-butyl-3-methylimidazolium bis(trifluoromethanesulfonyl)imide [BMI-TFSI], and about 1 part by weight of diethoxyacetophenone (DEAP) were mixed, and $LiBF_4$ ($Li^+$ concentration: 1 mol/L) was added thereto, thereby preparing a gel polymer electrolyte composition.
Solvent: acetamide (AA), adiponitrile (AN), sulfolane (SF)
Lithium salt: $LiClO_4$

Urethane acrylate

About 4 mol parts of hexamethylene diisocyanate and about 6 mol parts of polyester polyol (Union Chemical Co., U-1220) having a weight average molecular weight of about 2000 mol/g were fed into a reactor, and about 500 ppm of a tin-based catalyst was added thereto, followed by stirring at about 85°C for about 1 hour. Next, 2 mol parts of (meth)acrylate having a hydroxyl group was added thereto, and stirred at about 85°C for about 1 hour, thereby preparing ether-based urethane acrylate. The weight average molecular weight of the ether-based urethane acrylate was about 12000 g/mol.

Epoxy acrylate

4 mol parts of glycerol diglycidyl ether (GDE) and 8 mol parts of 2-carboxyethyl acrylate (2-HEA) were fed into a reactor, and about 500 ppm of an amine-based catalyst was added thereto, followed by stirring at about 100°C for about 1 hour, thereby preparing glycerol epoxy acrylate.

Multifunctional acrylate: MIWON Co., Miramer M500
Monofunctional acrylate: MIWON Co., Miramer M150
Photoinitiator: Ethyl(2,4,6-trimethylbenzoyl)phenyl phosphinate
Antioxidant: SHIN SEUNG HICHEM Co., Ltd., Antioxidant-MD1024
Gel polymer electrolyte composition #2

About 15 parts by weight of urethane acrylate, about 10 parts by weight of epoxy acrylate, about 5 parts by weight of multifunctional acrylate, about 5 parts by weight of monofunctional acrylate, about 1 part by weight of a photoinitiator, about 15 parts by weight of lithium salt, about 50 parts by weight of acetamide and about 1 part by weight of an antioxidant were added to prepare an electrolyte composition.

Example 1

About 10 parts by weight of Tungsten oxide powder #1, about 1 part by weight of TEOS and about 90 parts by weight of ethanol were uniformly mixed to prepare a first discoloration material composition. The first discoloration material composition was coated to a thickness of about 25 $\mu$m on the first ITO film, and a sol-gel reaction was allowed to occur at about 110°C for about 5 minutes, thereby forming a first discoloration layer having a thickness of about 600 nm. Next, about 10 parts by weight of carbon black, about 1 part by weight of TEOS and about 90 parts by weight of ethanol were uniformly mixed to prepare an electron-accepting material composition. Next, the electron-accepting material composition was coated to a thickness of about 2.5 $\mu$m on the first discoloration layer, and a sol-gel reaction was allowed to occur at about 110°C for about 5 minutes, thereby forming a photoelectron reduction layer having a thickness of about 60 nm. Accordingly, a first laminate including the first discoloration layer and the photoelectron reduction layer was formed.
About 11 parts by weight of nickel oxide powder, about 1 part by weight of TEOS and about 89 parts by weight of ethanol were uniformly mixed to prepare a second discoloration material composition. The second discoloration material composition was coated to a thickness of about 40 $\mu$m on the second ITO film, and a sol-gel reaction was allowed to occur

at about 120°C for about 5 minutes, thereby preparing a second laminate including a second discoloration layer having a thickness of 1200 nm. Gel polymer electrolyte composition #1 was coated to a thickness of about 100 $\mu$m on the first discoloration layer, the second ITO film having the second discoloration layer formed thereon was laminated on the coated Gel polymer electrolyte composition #1, and the coated Gel polymer electrolyte composition #1 was cured by UV light. Next, the laminate was aged by leaving it at room temperature for about 14 hours. Accordingly, the electrochromic element according to an embodiment was fabricated.

Examples 2 to 5 and Comparative Example 1

The electron-accepting material compositions were prepared as shown in Table 1 below to form the photoelectron reduction layers. In addition, the laminates were aged at room temperature as shown in Table 1 below.

[Table 1]

| Classification | Electron-accepting material, Thickness of photoelectron-accepting layer (nm) | Aging time (h) |
|---|---|---|
| Example 1 | Carbon black, 60 | 14 |
| Example 2 | Carbon black, 50 | 14 |
| Example 3 | Carbon black, 40 | 14 |
| Example 4 | Carbon black, 30 | 10 |
| Example 5 | CNT, 50 | 0 |
| Comparative Example 1 | - | 0 |

Example 6

About 10 parts by weight of Tungsten oxide powder #1, about 1 part by weight of TEOS and about 90 parts by weight of ethanol and about 0.1 parts by weight of carbon black were uniformly mixed to prepare a first discoloration material composition. The first discoloration material composition was coated to a thickness of about 40 $\mu$m on the first ITO film, and a sol-gel reaction was allowed to occur at about 110°C for about 5 minutes, thereby manufacturing a first discoloration layer. Accordingly, a first laminate including the first ITO film and the first discoloration layer was manufactured. About 11 parts by weight of nickel oxide powder, about 1 part by weight of TEOS and about 89 parts by weight of ethanol were uniformly to prepare a second discoloration material composition. The second discoloration material composition was coated to a thickness of about 50 $\mu$m on the second ITO film, and a sol-gel reaction was allowed to occur at about 120°C for about 5 minutes, thereby preparing a second discoloration layer including a second discoloration layer. The electrolyte composition was coated to a thickness of about 100 $\mu$m on the second discoloration layer. Next, a protective polyethylene terephthalate film including a release layer was disposed on the coated electrolyte composition layer. Next, the coated electrolyte composition was dried at about 120°C for 10 min to manufacture a second laminate. Next, the first laminate and the second laminate were allowed to stand at room temperature and 60% relative humidity for about 90 days.

Next, the first laminate and the second laminate were laminated, and the coated Gel polymer electrolyte composition #2 was cured by UV light. Next, the laminate was aged by leaving it at room temperature for about 14 hours. Accordingly, the electrochromic element according to an embodiment was fabricated.

Examples 7 to 10

The first discoloration material compositions were prepared to form the first discoloration layers as shown in Table 2 below. The remaining process was referenced from Example 5.

[Table **2**]

| Classification | Tungsten oxide (parts by weight) | Ethanol (parts by weight) | TEOS (parts by weight) | Electron-accepting material (parts by weight) | Aging time (h) |
|---|---|---|---|---|---|
| Example 6 | ELACO-W, 10 | 90 | 1 | Carbon black, 0.01 | 14 |
| Example 7 | ELACO-W, 10 | 90 | 1 | Carbon black, 0.05 | 14 |

(continued)

| Classification | Tungsten oxide (parts by weight) | Ethanol (parts by weight) | TEOS (parts by weight) | Electron-accepting material (parts by weight) | Aging time (h) |
|---|---|---|---|---|---|
| Example 8 | 8010CN, 10 | 90 | 1 | - | 14 |
| Example 9 | BTO, 10 | 90 | 1 | - | 10 |
| Example 10 | ELACO-W, 10 | 90 | 1 | CNT, 0.01 | 10 |

Example 11

About 10 parts by weight of Tungsten oxide powder #1, about 1 part by weight of TEOS, about 90 parts by weight of ethanol and about 0.1 parts by weight of carbon black were uniformly mixed to prepare a first discoloration material composition. The first discoloration material composition was coated to a thickness of about 25 $\mu$m on the first ITO film, and a sol-gel reaction was allowed to occur at about 110°C for about 5 minutes, thereby preparing a first laminate including a first discoloration layer having a thickness of about 600 nm. About 11 parts by weight of nickel oxide powder, about 1 part by weight of TEOS and about 89 parts by weight of ethanol were uniformly mixed to prepare a second discoloration material composition. The second discoloration material composition was coated to a thickness of about 40 $\mu$m on the second ITO film, and a sol-gel reaction was allowed to occur at about 120°C for about 5 minutes, thereby preparing a second laminate including a second discoloration layer having a thickness of 1200 nm. Gel polymer electrolyte composition #1 was coated to a thickness of about 100 $\mu$m on the first discoloration layer, the second ITO film having the second discoloration layer formed thereon was laminated on the coated Gel polymer electrolyte composition #1, and the coated Gel polymer electrolyte composition #1 was cured by UV light. Next, the laminate was aged by leaving it at room temperature for about 14 hours. Accordingly, the electrochromic element according to an embodiment was fabricated.

Examples 12 to 15 and Comparative Example 2

As shown in Table 3 below, the first discoloration material compositions were prepared to form the first discoloration layers. The remaining process was referenced from Example 11. In addition, As shown in Table 3 below, the laminates were aged at room temperature.

[Table 3]

| Classification | Tungsten oxide (parts by weight) | Ethanol (parts by weight) | TEOS (parts by weight) | Electron-accepting material (parts by weight) | Aging time (h) |
|---|---|---|---|---|---|
| Example 11 | 10 | 90 | 1 | Carbon black, 0.01 | 14 |
| Example 12 | 10 | 90 | 1 | Carbon black, 0.05 | 14 |
| Example 13 | 10 | 90 | 1 | Carbon black, 0.1 | 14 |
| Example 14 | 10 | 90 | 1 | Carbon black, 0.1 | 10 |
| Example 15 | 10 | 90 | 1 | CNT, 0.01 | 0 |
| Comparative Example 2 | 10 | 90 | 1 | 0 | 0 |

Evaluation examples

1. Solar simulator

The electrochromic elements according to an embodiment were irradiated with about 1000 W/$m^2$ of similar sunlight for about 10 minutes using a solar simulator (TNE TECH Co., Ltd., UV aging tester).

2. Total light transmittance

For the electrochromic elements of Examples and Fabrication Examples, a transmittance before irradiation with the similar sunlight and a transmittance after irradiation with the similar sunlight were measured as total light transmittances in a wavelength range of about 380 nm to about 780 nm using a solar spectrum meter (EDTM Co., SS2450).

3. Haze

For the electrochromic elements of Examples and Fabrication Examples, a haze before irradiation with the similar sunlight and a haze after irradiation with the similar sunlight were measured using CM-5 (Konica-Minolta,).

4. Color value

For the electrochromic elements of Examples and Fabrication Examples, color values (L*, a* and b*) before irradiation with the similar sunlight and color values after irradiation with the similar sunlight were measured using a spectrophotometer (Konica-Minolta, CM-5).

5. Charging/discharging test

Each of the electrochromic elements fabricated in Comparative Examples and Comparative Example was placed in a solar simulator and exposed to similar sunlight. In this state, the (-) electrode of a charge/discharge tester (WonATech Co., WBCS_D70714K1) was connected to a bus bar attached to tungsten oxide, and the (+) electrode thereof was connected to a bus bar attached to nickel oxide. Next, when a predetermined voltage was applied and thus a sufficiently high state of discoloration transmittance was reached, each voltage was connected in reverse by the internal electrical deformation of the charge/discharge tester so that the (+) voltage was applied to the bus bar connected to tungsten oxide and the (-) voltage was applied to the bus bar connected to nickel oxide. A charging/discharging test was conducted by measuring a transmittance and a charge/discharge amount while continuously repeating the cycle of reaching a sufficiently low coloration transmittance as one cycle, and the number of times the discoloration range did not decrease after a certain cycle operation and the charge/discharge amount was maintained at 80% or more was measured.

6. Transmittance decrease after 90 days

For each of the first laminates manufactured in Comparative Examples and Comparative Example, an initial transmittance, and a transmittance after 90 days were measured. The transmittance of the first laminate was measured as a total light transmittance using a solar spectrum meter (EDTM Co., SS2450).

7. Haze increase after 90 days

For each of the first laminates manufactured in Comparative Examples and Comparative Example, an initial haze, and a haze after 90 days were measured. The haze of the first laminate was measured as total light transmittance using a solar spectrum meter (EDTM Co., SS2450).

8. Transmittance deviation after 90 days

Each of the first laminates manufactured in Comparative Examples and Comparative Examples was cut to a size of about 1 m × 1 m and left at room temperature and 60% relative humidity for about 90 days. Next, the transmittance was measured in a measurement region unit of about 5 cm × 5 cm in the first laminate. For the measurement region, the maximum transmittance, the minimum transmittance and the average transmittance were obtained, and the transmittance deviation was derived.

9. Decrease in driving range

Each of the electrochromic elements manufactured in Examples was subjected to discoloring and coloring driving for about 10,000 cycles, and an initial driving range and a driving range after 10,000 cycles were measured. Accordingly, the driving range decrease was derived from a difference between the initial driving range and the driving range after 10000 cycles.

10. Driving range deviation

The first bus bar and the second bus bar were respectively mounted on the first transparent electrode and second transparent electrode of each of the electrochromic elements manufactured in Examples and Comparative Examples. Next, a driving voltage of about 1.5 V was applied to the first bus bar and the second bus bar, and the electrochromic

elements were colored. Next, a driving voltage of about 1.5 V was applied in the opposite direction to the colored sample, and the sample was discolored. Here, a coloring transmittance and a discoloring transmittance were measured in each measurement region, and a driving range was measured by a difference between the coloring transmittance and the discoloring transmittance. Next, a maximum driving range, a minimum driving range, and an average driving range were derived from the measurement region, and the driving range decrease was obtained by dividing a difference between the maximum driving range and the minimum driving range by the average driving range.

As shown in Table 4 below, the first light transmittance, second light transmittance, first haze and second haze of each of the electrochromic elements according to Comparative Examples and Comparative Example were measured.

[Table 4]

| Classification | First light transmittance (%) | Second light transmittance (%) | First haze (%) | Second haze (%) |
|---|---|---|---|---|
| Example 1 | 55 | 51 | 2.35 | 5.31 |
| Example 2 | 59 | 52 | 2.44 | 2.98 |
| Example 3 | 62 | 55 | 1.56 | 3.82 |
| Example 4 | 65 | 57 | 1.89 | 3.91 |
| Example 5 | 56 | 52 | 1.08 | 5.2 |
| Comparative Example 1 | 69 | 51 | 1.98 | 7.95 |

As shown in Table 5 below, the color value and charge/discharge cycles of each of the electrochromic elements according to Comparative Examples and Comparative Example were measured.

[Table 5]

| Classification | First L* | Second L* | First a* | Second a* | First b* | Second b* | Charge/discharge cycles |
|---|---|---|---|---|---|---|---|
| Example 1 | 91.54 | 89.9 | 0.51 | -4.3 | 2.37 | -0.75 | 8000 |
| Example 2 | 91.45 | 90.02 | 0.35 | -2.8 | 2.25 | 0.89 | 11000 |
| Example 3 | 84.06 | 79.8 | -1.81 | -5.52 | 1.80 | -5.4 | 20000 |
| Example 4 | 87.1 | 78.9 | -1.84 | -5.63 | 1.78 | -5.2 | 15000 |
| Example 5 | 91.34 | 90.05 | -1.85 | -1.45 | 1.95 | 0.26 | 20000 |
| Comparative Example 1 | 93.33 | 84.19 | 0.67 | -6.47 | 1.66 | -4.41 | 3000 |

As shown in Tables 4 and 5, the electrochromic elements according to Examples had high light resistance to external sunlight.

As shown in Table 6 below, the transmittance decrease, haze increase, transmittance deviation and driving range deviation of each of the first laminates and the electrochromic element according to Comparative Examples and Comparative Example were measured.

[Table 6]

| Classification | Transmittance decrease (%) | Haze increase (%) | Transmittance deviation | Driving range decrease (%) | Driving range deviation |
|---|---|---|---|---|---|
| Example 6 | 1.1 | 0.13 | 0.061 | 2.3 | 0.075 |
| Example 7 | 1.97 | 0.21 | 0.078 | 1.5 | 0.076 |
| Example 8 | 1.7 | 0.15 | 0.089 | 1.8 | 0.095 |
| Example 9 | 1.8 | 0.16 | 0.057 | 2.2 | 0.067 |
| Example 10 | 2.3 | 0.21 | 0.072 | 2.5 | 0.085 |

As shown in Table 6, the electrochromic elements according to Examples can suppress transmittance decrease

and haze increase and reduce a transmittance deviation and a driving range deviation.

As shown in Table 7 below, the first light transmittance, second light transmittance, first haze and second haze of each of the electrochromic elements according to Comparative Examples and Comparative Example were measured.

[Table 7]

| Classification | First light transmittance (%) | Second light transmittance (%) | First haze (%) | Second haze (%) |
|---|---|---|---|---|
| Example 11 | 81 | 68 | 1.19 | 6.31 |
| Example 12 | 77 | 69 | 1.25 | 1.98 |
| Example 13 | 71 | 66 | 2.19 | 2.82 |
| Example 14 | 71 | 68 | 2.17 | 2.91 |
| Example 15 | 80 | 67 | 1.08 | 5.32 |
| Comparative Example 2 | 83 | 55 | 0.98 | 7.19 |

As shown in Table 8 below, the color value and charge/discharge cycles of the electrochromic elements according to Comparative Examples and Comparative Example were measured.

[Table 8]

| Classification | First L* | Second L* | First a* | Second a* | First b* | Second b* | Charge/discharge cycles |
|---|---|---|---|---|---|---|---|
| Example 11 | 92.44 | 89.92 | 0.51 | -4.13 | 2.27 | -071 | 7000 |
| Example 12 | 92.44 | 89.92 | 0.35 | -2.28 | 2.28 | 0.79 | 10000 |
| Example 13 | 83.05 | 74.87 | -1.61 | -5.59 | 1.89 | -5.44 | 20000 |
| Example 14 | 83.19 | 74.95 | -1.68 | -5.64 | 1.99 | -5.32 | 15000 |
| Example 15 | 92.39 | 90.05 | -1.68 | -1.43 | 1.87 | 0.23 | 20000 |
| Comparative Example 2 | 94.33 | 84.19 | 0.56 | -6.47 | 1.66 | -4.40 | 3000 |

As shown in Tables 7 and 8, the electrochromic elements according to Examples had high light resistance to external sunlight.

## Claims

**1.** An electrochromic element, comprising:

a first substrate;
a second substrate disposed on the first substrate; and
an electrochromic part disposed between the first substrate and the second substrate,
wherein a change in light transmittance measured by Measurement Method below is less than 0.25:
[Measurement Method]
The electrochromic part is irradiated with similar sunlight at an intensity of 1000 W/m$^2$ for 10 minutes through the first substrate, a first light transmittance of the electrochromic element before irradiation with the similar sunlight is measured, a second light transmittance of the electrochromic element after irradiation with the similar sunlight is measured, and the change in light transmittance is obtained by dividing a difference between the first light transmittance and the second light transmittance by the first light transmittance.

**2.** The electrochromic element according to claim 1, wherein a haze change measured by Measurement Method below is less than 5.5%:
[Measurement Method]
A first haze of the electrochromic element according to an embodiment is measured before irradiation with the similar sunlight, a second haze of the electrochromic element according to an embodiment is measured after irradiation with

the similar sunlight, and the haze change is a value obtained by subtracting the first haze from the second haze.

3. The electrochromic element according to claim 2, wherein a change in L* measured by Measurement Method below is less than 9:
[Measurement Method]
A first L* of the first discoloration layer before irradiation with the similar sunlight is measured, a second L* of the first discoloration layer after irradiation with the similar sunlight is measured, and the change in L* is an absolute value of a difference between the second L* and the first L*.

4. The electrochromic element according to claim 3, wherein a change in a* measured by Measurement Method below is less than 5:
[Measurement Method]
A first a* of the first discoloration layer before irradiation with the similar sunlight is measured, a second a* of the first discoloration layer after irradiation with the similar sunlight is measured, and the change in a* is an absolute value of a difference between the second a* and the first a*.

5. The electrochromic element according to claim 4, wherein a change in b* measured by Measurement Method below is less than 10:
[Measurement Method]
A first b* of the first discoloration layer before irradiation with the similar sunlight is measured, a second b* of the first discoloration layer after irradiation with the similar sunlight is measured, and the change in b* is an absolute value of a difference between the second b* and the first b*.

6. The electrochromic element according to claim 1, wherein the electrochromic part comprises:

a first transparent electrode disposed on the first substrate;
a first discoloration layer disposed on the first transparent electrode;
a photoelectron reduction layer disposed on the first discoloration layer;
an electrolyte layer disposed on the photoelectron reduction layer;
a second discoloration layer disposed on the electrolyte layer; and
a second transparent electrode disposed on the second discoloration layer,
wherein the first discoloration layer comprises an electrochromic material, and
the photoelectron reduction layer comprises an electron-accepting material having a lower band gap than the electrochromic material.

7. The electrochromic element according to claim 6, wherein the first discoloration material comprises tungsten oxide, and
the electron-accepting material comprises at least one selected from the group consisting of carbon black, carbon nanotubes and graphene.

8. The electrochromic element according to claim 2, wherein the first light transmittance is 50% to 85%, and the first haze is 0.1% to 5%.

9. The electrochromic element according to claim 5, wherein the first L* is 80 to 100, the first a* is -2 to 1.5, and the first b* is 0.5 to 4.

10. The electrochromic element according to claim 6, wherein the photoelectron reduction layer comprises the electron-accepting material and a binder.

11. A window device, comprising:

a frame;
a window mounted on the frame; and
an electrochromic element disposed in the window,
wherein the electrochromic element comprises:

a first substrate;
a second substrate disposed on the first substrate; and

an electrochromic part disposed between the first substrate and the second substrate,
wherein a change in light transmittance measured by Measurement Method below is less than 0.25:
[Measurement Method]
The electrochromic part is irradiated with similar sunlight at an intensity of 1000 $W/m^2$ for 10 minutes through the first substrate, a first light transmittance of the electrochromic element before irradiation with the similar sunlight is measured, a second light transmittance of the electrochromic element after irradiation with the similar sunlight is measured, and the change in light transmittance is obtained by dividing a difference between the first light transmittance and the second light transmittance by the first light transmittance.

【FIG. 1】

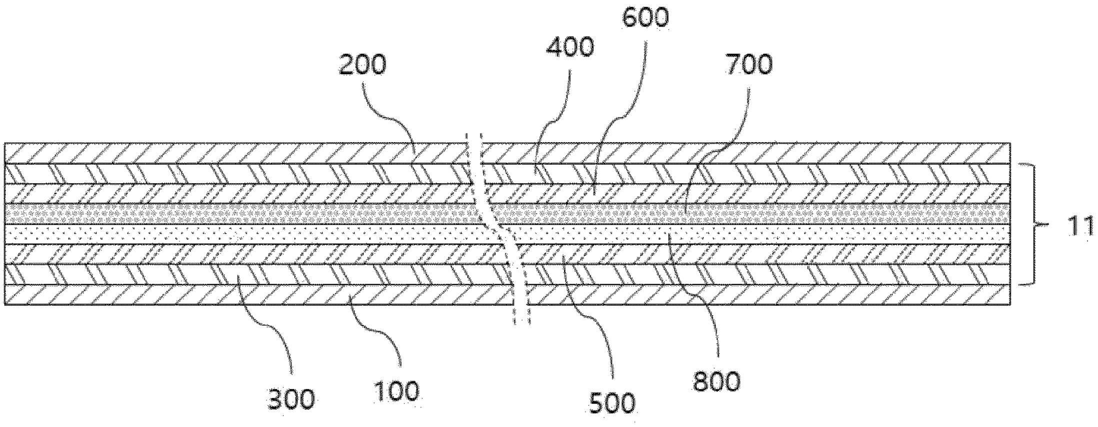


【FIG. 2】

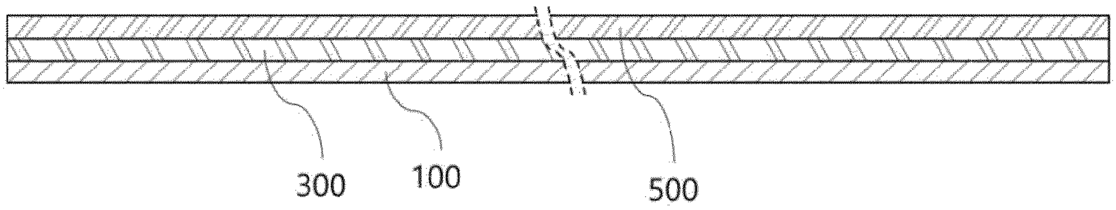


【FIG. 3】

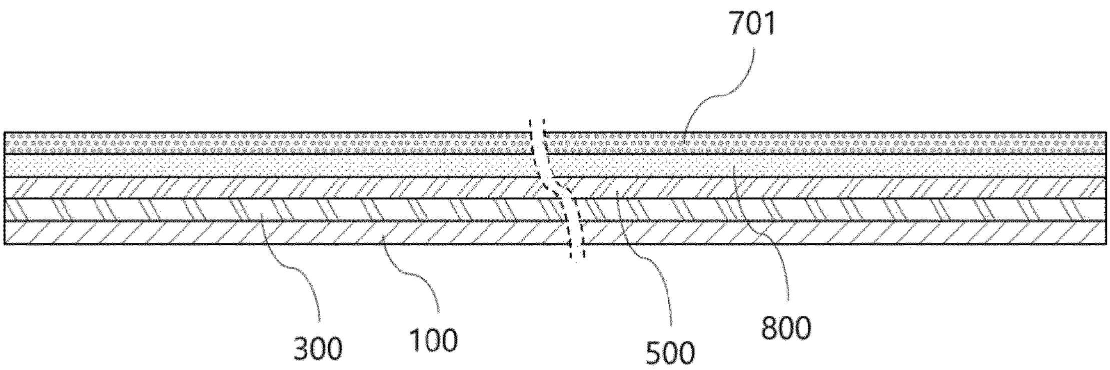

【FIG. 4】

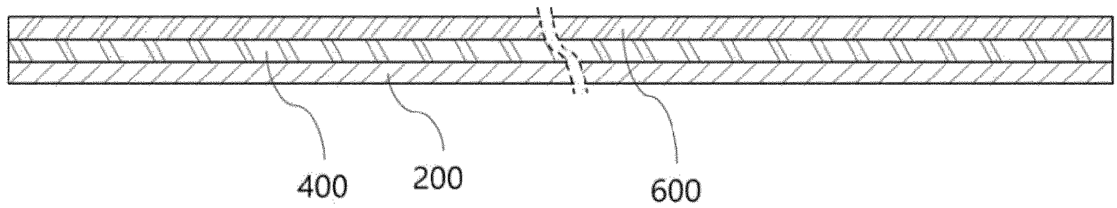


【FIG. 5】

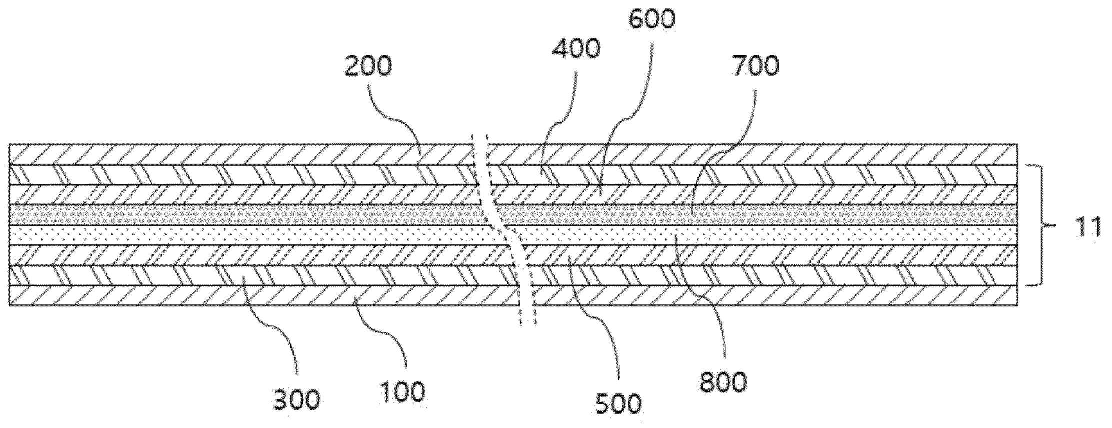


【FIG. 6】

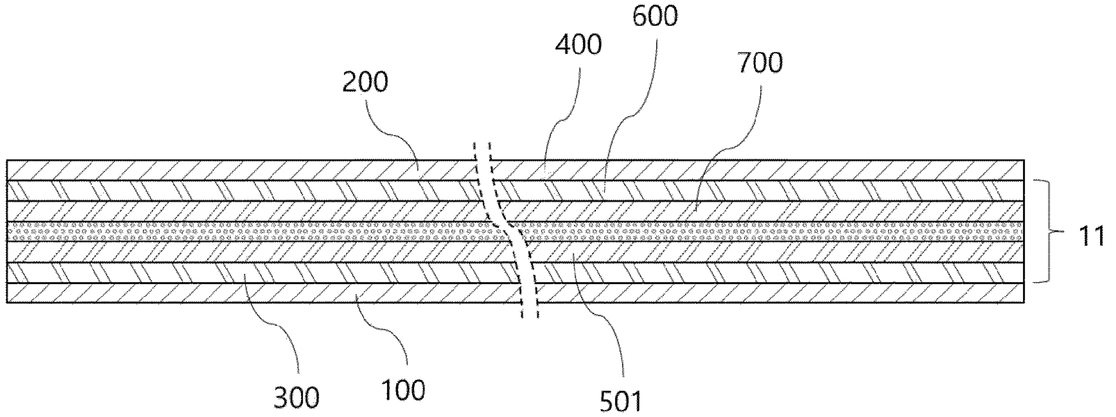

【FIG. 7】

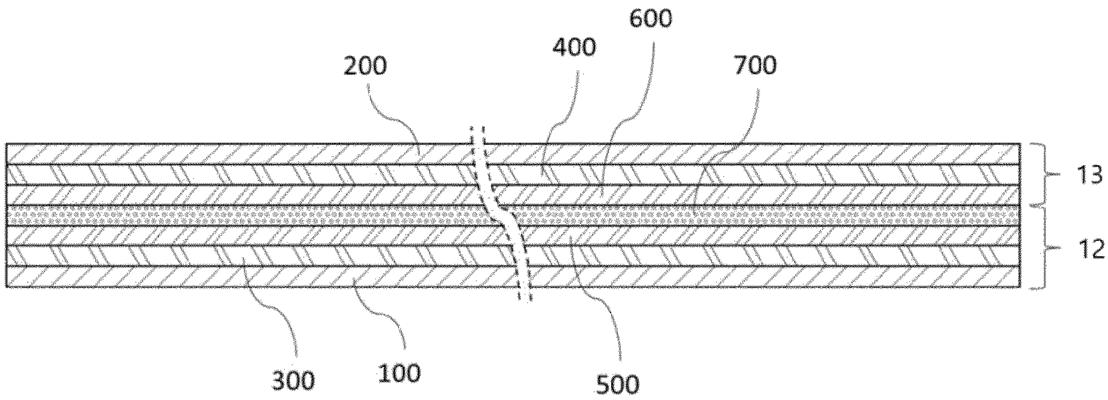


【FIG. 8】

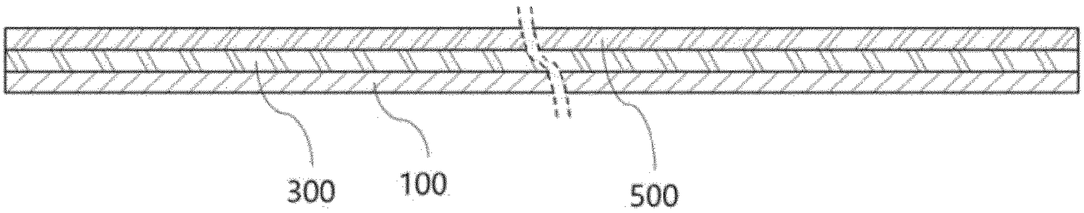


【FIG. 9】

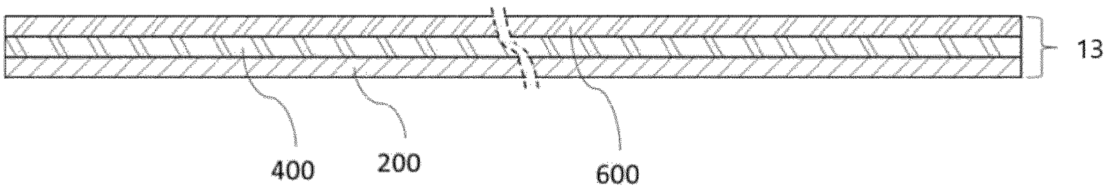


【FIG. 10】

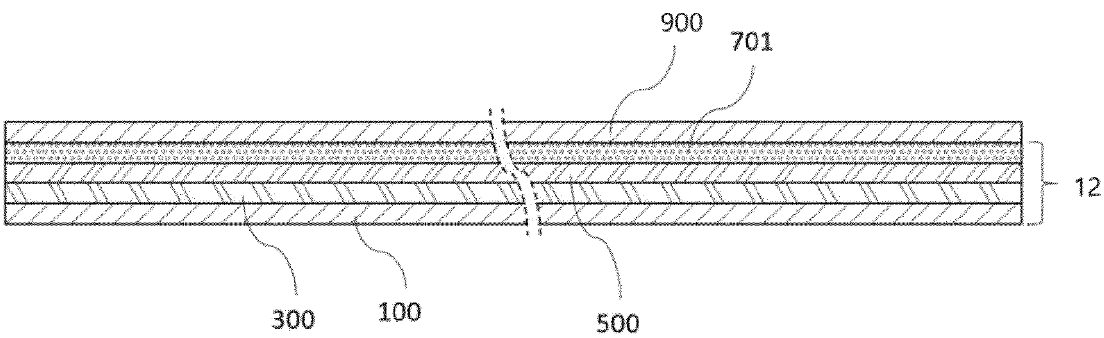

【FIG. 11】

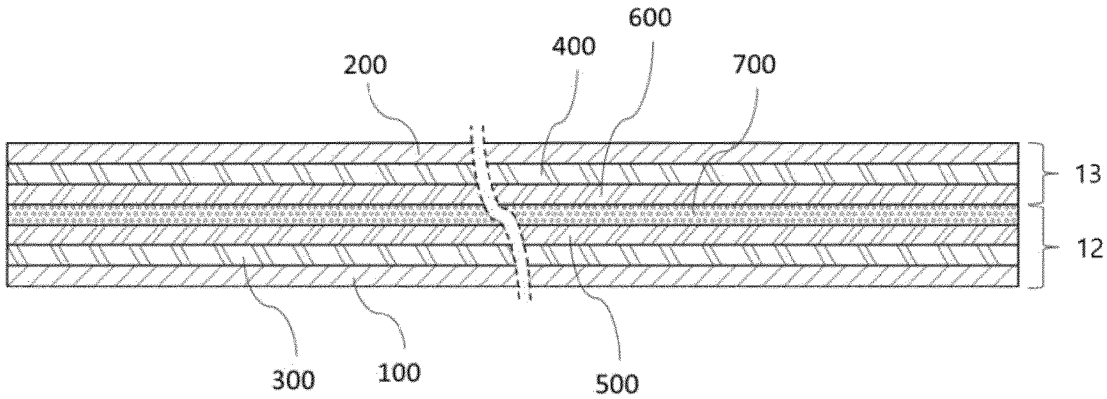


【FIG. 12】

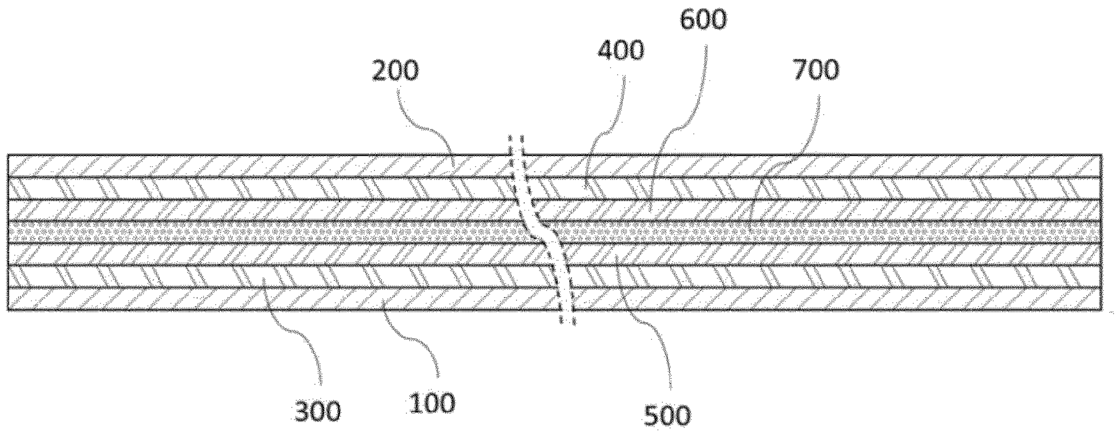


【FIG. 13】

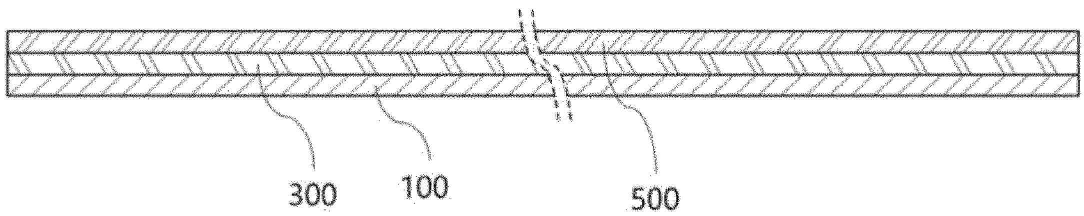

【FIG. 14】

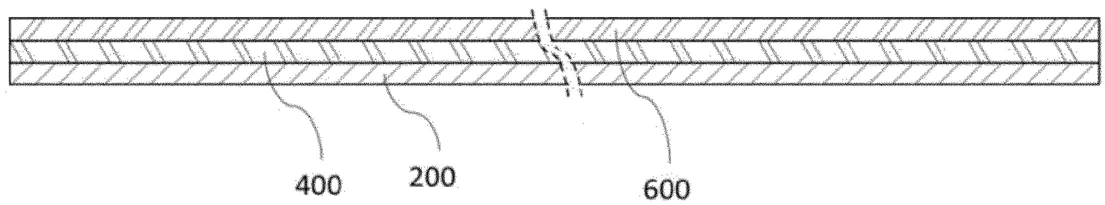


【FIG. 15】

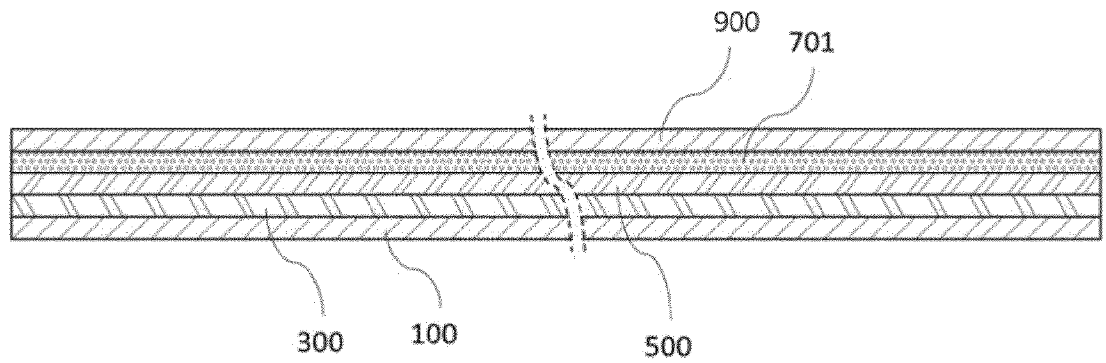


【FIG. 16】

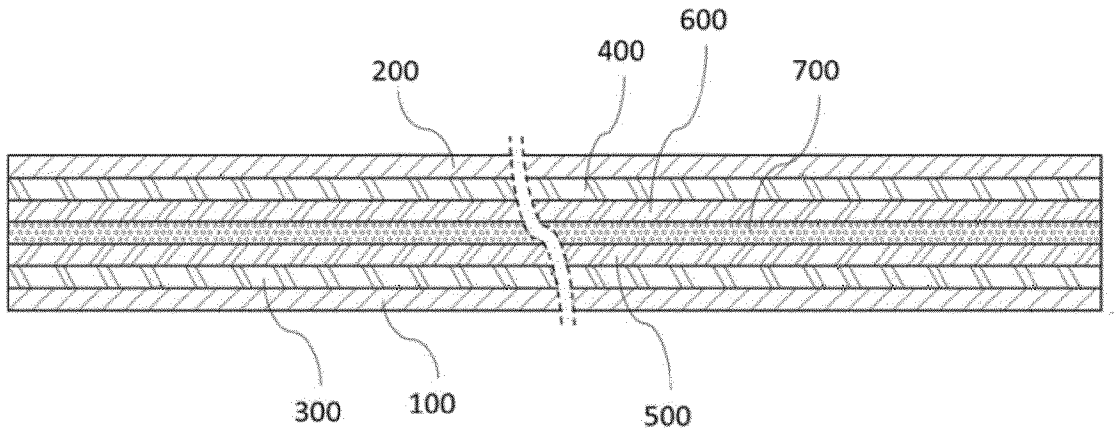

【FIG. 17】

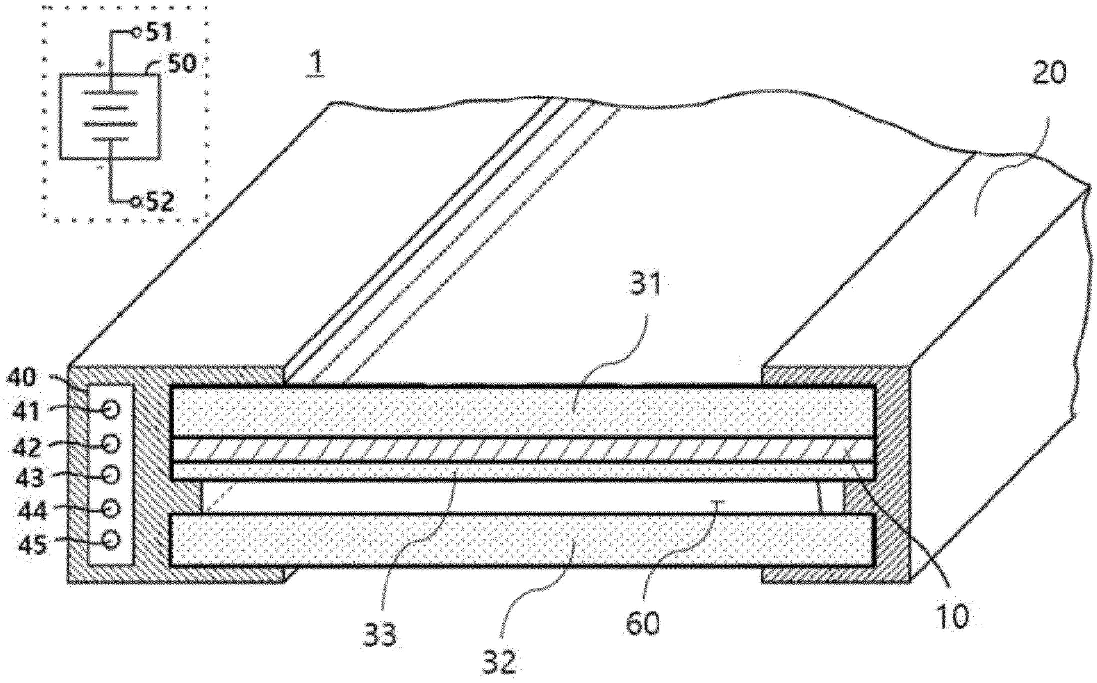

## INTERNATIONAL SEARCH REPORT

International application No.
**PCT/KR2023/010931**

**A. CLASSIFICATION OF SUBJECT MATTER**

**G02F 1/153**(2006.01)i; **G02F 1/155**(2006.01)i; **G02F 1/1523**(2019.01)i; **B32B 7/023**(2019.01)i; **C09K 9/00**(2006.01)i; **E06B 9/24**(2006.01)i; **B60J 3/04**(2006.01)i; **G02F 1/15**(2006.01)i

According to International Patent Classification (IPC) or to both national classification and IPC

**B. FIELDS SEARCHED**

Minimum documentation searched (classification system followed by classification symbols)

G02F 1/153(2006.01); B32B 7/023(2019.01); C09K 9/00(2006.01); E06B 9/24(2006.01); G02F 1/15(2006.01); G02F 1/1523(2019.01); G02F 1/1524(2019.01); G02F 1/155(2006.01); G02F 1/163(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전기변색(electrochromic), 전해질(electrolyte), 전극(electrode), 투과율(transmissivity), 헤이즈(haze), 표색(color specification), 유사 태양광(pseudo solar light), 조사(radiation), 측정(measure)

**C. DOCUMENTS CONSIDERED TO BE RELEVANT**

| Category* | Citation of document, with indication, where appropriate, of the relevant passages | Relevant to claim No. |
|---|---|---|
| Y<br>A | KR 10-2022-0029202 A (SKC CO., LTD.) 08 March 2022 (2022-03-08)<br>See paragraph [0022]; and figures 3-4. | 1,11<br>2-10 |
| Y | JP 2019-164249 A (RICOH CO., LTD.) 26 September 2019 (2019-09-26)<br>See paragraph [0215]. | 1,11 |
| Y | KR 10-2022-0065074 A (VIEW, INC.) 19 May 2022 (2022-05-19)<br>See paragraphs [0053]-[0054]; and figure 1a. | 11 |
| A | KR 10-2022-0018539 A (SKC CO., LTD.) 15 February 2022 (2022-02-15)<br>See paragraphs [0023]-[0031] and [0217]; and figures 3-4. | 1-11 |
| A | KR 10-2020-0135767 A (SEKISUI CHEMICAL CO., LTD.) 03 December 2020 (2020-12-03)<br>See paragraphs [0008]-[0065]. | 1-11 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **09 November 2023** | **09 November 2023** |
| Name and mailing address of the ISA/KR<br>**Korean Intellectual Property Office**<br>**Government Complex-Daejeon Building 4, 189 Cheongsa-ro, Seo-gu, Daejeon 35208** | Authorized officer |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/010931**

| Patent document cited in search report | Publication date (day/month/year) | Patent family member(s) | Publication date (day/month/year) |
|---|---|---|---|
| KR 10-2022-0029202 A | 08 March 2022 | CN 114114772 A | 01 March 2022 |
| | | KR 10-2475733 B1 | 08 December 2022 |
| | | US 2022-0066275 A1 | 03 March 2022 |
| JP 2019-164249 A | 26 September 2019 | JP 7223242 B2 | 16 February 2023 |
| | | US 11106106 B2 | 31 August 2021 |
| | | US 2019-0285960 A1 | 19 September 2019 |
| KR 10-2022-0065074 A | 19 May 2022 | AU 2022-357759 A1 | 21 April 2022 |
| | | CA 3152920 A1 | 08 April 2021 |
| | | EP 4038449 A1 | 10 August 2022 |
| | | JP 2022-551292 A | 08 December 2022 |
| | | WO 2021-067505 A1 | 08 April 2021 |
| KR 10-2022-0018539 A | 15 February 2022 | CN 113777845 A | 10 December 2021 |
| | | KR 10-2021-0153489 A | 17 December 2021 |
| | | KR 10-2366161 B1 | 22 February 2022 |
| | | KR 10-2475740 B1 | 08 December 2022 |
| | | US 11747697 B2 | 05 September 2023 |
| | | US 2021-0389639 A1 | 16 December 2021 |
| KR 10-2020-0135767 A | 03 December 2020 | CN 111868578 A | 30 October 2020 |
| | | EP 3783400 A1 | 24 February 2021 |
| | | EP 3783400 A4 | 24 November 2021 |
| | | JP 2021-189010 A1 | 12 February 2021 |
| | | TW 201942636 A | 01 November 2019 |
| | | US 2021-0025226 A1 | 28 January 2021 |
| | | WO 2019-189010 A1 | 03 October 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020010087586
- KR 0184841
- KR 1020160101297